(19) Europäisches Patentamt
European Patent Office
Office européen des brevets

(11) **EP 2 275 971 B1**

(12) **FASCICULE DE BREVET EUROPEEN**

(45) Date de publication et mention
de la délivrance du brevet:
**28.10.2020 Bulletin 2020/44**

(51) Int Cl.:
**G06K 9/00** *(2006.01)* **B60R 1/00** *(2006.01)*
**G01S 5/00** *(2006.01)* **G06T 7/20** *(2017.01)*

(21) Numéro de dépôt: **10168480.1**

(22) Date de dépôt: **05.07.2010**

(54) **PROCÉDÉ DE DÉTECTION D'UN OBSTACLE POUR VÉHICULE AUTOMOBILE**

VERFAHREN ZUR ERKENNUNG VON HINDERNISSEN FÜR EIN FAHRZEUG

METHOD OF OBSTACLE DETECTION FOR A VEHICLE

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **06.07.2009 FR 0954633**

(43) Date de publication de la demande:
**19.01.2011 Bulletin 2011/03**

(73) Titulaire: **VALEO VISION**
**93012 Bobigny (FR)**

(72) Inventeurs:
• **Kuoch, Siav Kuong**
**94100, SAINT MAUR DES FOSSES (FR)**
• **Chanussot, Lowik**
**75010, PARIS (FR)**
• **Rebut, Julien**
**75019, PARIS (FR)**
• **Charpentier, Adrien**
**70180, STUTTGART (DE)**
• **Dubois, Eric**
**93110, ROSNY SOUS BOIS (FR)**
• **Fleury, Benoist**
**94300, VINCENNES (FR)**
• **Reilhac, Patrice**
**73732, ESSLINGEN (DE)**

(74) Mandataire: **Claassen, Maarten Pieter et al
Valeo Schalter und Sensoren GmbH
CDA-IP
Laiernstraße 12
74321 Bietigheim-Bissingen (DE)**

• L. PALETTA AND G. PAAR: "Bayesian decision fusion for dynamic multi-cue object detection" PROC. INDIAN CONFERENCE ON COMPUTER VISION, GRAPHICS AND IMAGE PROCESSING, 16 décembre 2002 (2002-12-16), - 18 décembre 2002 (2002-12-18) XP002586079
• B. SCHIELE ET AL.: "Visual People Detection - Different Models, Comparison and Discussion" PROC. IEEE ICRA 2009, WORKSHOP ON PEOPLE DETECTION AND TRACKING, mai 2009 (2009-05), XP002586080 Kobe, Japan
• NAVNEET DALAL ET AL: "Human Detection Using Oriented Histograms of Flow and Appearance" 1 janvier 2006 (2006-01-01), COMPUTER VISION - ECCV 2006 LECTURE NOTES IN COMPUTER SCIENCE;;LNCS, SPRINGER, BERLIN, DE, PAGE(S) 428 - 441 , XP019036457 ISBN: 9783540338345 sections 4."Appearance Descriptors", 5."Motion Descriptors" et 8."Experimental Results",* figures 3,4,7 *
• ENZWEILER M ET AL: "Monocular pedestrian recognition using motion parallax" INTELLIGENT VEHICLES SYMPOSIUM, 2008 IEEE, IEEE, PISCATAWAY, NJ, USA, 4 juin 2008 (2008-06-04), pages 792-797, XP031318814 ISBN: 978-1-4244-2568-6
• ABRAMSON Y ET AL: "Hardware-friendly pedestrian detection and impact prediction" INTELLIGENT VEHICLES SYMPOSIUM, 2004 IEEE PARMA, ITALY JUNE 14-17, 2004, PISCATAWAY, NJ, USA,IEEE LNKD-DOI:10.1109/IVS.2004.1336450, 14 juin 2004 (2004-06-14), pages 590-595, XP010727713 ISBN: 978-0-7803-8310-4

(56) Documents cités:
EP-A2- 1 959 675

- GANDHI T ET AL: "Pedestrian Protection Systems: Issues, Survey, and Challenges" IEEE TRANSACTIONS ON INTELLIGENT TRANSPORTATION SYSTEMS, IEEE SERVICE CENTER, PISCATAWAY, NJ, US LNKD-DOI:10.1109/TITS.2007.903444, vol. 8, no. 3, 1 septembre 2007 (2007-09-01), pages 413-430, XP011191504 ISSN: 1524-9050
- PAUL VIOLA ET AL: "Detecting Pedestrians Using Patterns of Motion and Appearance" INTERNATIONAL JOURNAL OF COMPUTER VISION, KLUWER ACADEMIC PUBLISHERS, BO LNKD- DOI:10.1007/S11263-005-6644-8, vol. 63, no. 2, 1 juillet 2005 (2005-07-01), pages 153-161, XP019216468 ISSN: 1573-1405
- STEFAN MUNDER ET AL: "Pedestrian Detection and Tracking Using a Mixture of View-Based Shapeâ Texture Models" IEEE TRANSACTIONS ON INTELLIGENT TRANSPORTATION SYSTEMS, IEEE SERVICE CENTER, PISCATAWAY, NJ, US, vol. 9, no. 2, 1 juin 2008 (2008-06-01), pages 333-343, XP011214424 ISSN: 1524-9050
- SZARVAS M ET AL: "Real-time Pedestrian Detection Using LIDAR and Convolutional Neural Networks" INTELLIGENT VEHICLES SYMPOSIUM, 2006 IEEE MEGURO-KU, JAPAN 13-15 JUNE 2006, PISCATAWAY, NJ, USA,IEEE LNKD- DOI:10.1109/IVS.2006.1689630, 13 juin 2006 (2006-06-13), pages 213-218, XP010937015 ISBN: 978-4-901122-86-3

**EP 2 275 971 B1**

## Description

La présente invention concerne un procédé de détection d'un obstacle dans un environnement d'un véhicule automobile.

Elle concerne également un dispositif de mise en œuvre du procédé.

Elle trouve une application particulière dans le domaine des véhicules automobiles.

Des procédés de détection d'un obstacle dans un environnement sont par exemple décrits dans l'article intitulé « Bayesian Decision Fusion for Dynamic Multi-cue Object Détection » écrit par Lucas Paletta et Gerhard Paar , et publié dans "Indian Conference on Computer Vision, Graphics and Image Processing" le 16-12-2002 (XP002586079), et dans l'article intitulé « Human Detection Using Oriented Histograms of Flow and Appearance » écrit par Navneet Dalal, Bill Triggs et Cordelia Schmid, et publié en 2006 dans "Lecture Notes in Computer Science-ECCV 2006", Springer, pp. 428-441, XP019036457.

Dans le domaine des véhicules automobiles, un état de la technique connu de procédé de détection d'un obstacle dans un environnement d'un véhicule automobile, comporte les étapes de :

- Détection d'un obstacle ;
- Classification du véhicule détecté selon une catégorie de dangerosité en fonction de sa vitesse de déplacement et de sa position par rapport à l'axe du véhicule considéré ; et
- Envoi de la classification à un élément de mesure de dangerosité.

Un inconvénient de cet état de la technique est que cette détection est difficilement applicable à la détection et la classification d'un piéton.

La présente invention a pour but un procédé de détection d'un obstacle dans un environnement d'un véhicule automobile, qui permette de détecter de manière précise non seulement des véhicules mais également des piétons.

Selon un premier objet de l'invention, ce but est atteint par un procédé conformément à la revendication 1.

Comme on va le voir en détail par la suite, le fait de combiner une détection par reconnaissance de forme et de mouvement va permettre de détecter et localiser de façon robuste un obstacle, et le fait d'appliquer à ces détections des probabilités d'appartenance à une catégorie au moyen d'indices de confiance va permettre de renforcer la détection d'un piéton. Le procédé permet en plus d'obtenir les obstacles en mouvements n'appartenant pas à l'arrière-plan.

Selon des modes de réalisation non limitatifs, le procédé de détection peut comporter en outre une ou plusieurs caractéristiques supplémentaires parmi les suivantes :

- Le procédé de détection comporte en outre les étapes supplémentaires de :

  - Effectuer une troisième détection d'obstacle par capteur(s) avec une plage de détection inférieure à un premier seuil résultant en une position déterminée ;
  - Projeter la position déterminée dans un repère de référence ;
  - Projeter les régions d'intérêt validées dans ledit repère de référence ; et
  - Mettre en correspondance les deux projections obtenues et attribuer une position déterminée à l'obstacle classifié en fonction de la mise en correspondance.

La détection par capteurs actifs (capteur de distance) permet d'affiner la localisation des obstacles détectés sur une image acquise de l'environnement du véhicule.

- Le repère de référence est le repère image. Cela permet de minimiser l'impact des erreurs d'estimation de distances des régions d'intérêt dans le repère véhicule.

- La première détection par reconnaissance de forme comporte les sous-étapes de :

  - Construire une pyramide d'images par sous échantillonnage récursif d'une image acquise ;
  - Pour chaque image sous-échantillonnée :

    - Balayer ladite image avec une vignette représentative d'un obstacle déterminé ;
    - A chaque position successive d'une vignette dans ladite image, analyser son contenu au moyen d'un ensemble de classificateurs, lesdits classificateurs étant déterminés lors d'une phase d'apprentissage préalable.

Cela permet de détecter des obstacles selon les distances de détection à laquelle ils se trouvent dans une image. Le résultat de l'application des classificateurs permet de déterminer si un obstacle se trouve dans une vignette, et donc de le détecter. Par vignette, on entend dans la présente demande une zone de détection dans l'image. Cette zone de détection est de taille et de forme déterminée. Bien entendu, il est possible de lui conférer des formes différentes. Le système selon la présente invention procède à la détection d'obstacle à l'intérieur des limites de cette vignette. Selon une variante de réalisation, la vignette est représentative de l'obstacle à détecter en ce qu'elle correspond environ à la surface qu'occupera ce type d'obstacle dans l'image. Par exemple, pour détecter un piéton, un peut prendre une forme rectangulaire dont le grand côté est vertical. Ainsi, tout piéton dont l'image sera comprise à l'intérieur de ce rectangle sera détecté.

- La première détection par reconnaissance de forme comporte en outre une sous-étape supplémentaire de déterminer une zone de balayage dans une image sous-échantillonnée. Cela réduit le nombre de traitements.
- Une deuxième détection de mouvement comporte les sous-étapes de :

  - Déterminer des points d'intérêt sur une image acquise ;
  - Suivre ces points d'intérêt sur l'image suivante et déterminer leur déplacement ;
  - Regrouper en deuxièmes régions d'intérêt lesdits points d'intérêt ayant un déplacement similaire ;
  - Déterminer le déplacement du véhicule ; et
  - Discriminer des deuxièmes régions d'intérêt ayant un mouvement dans l'image non résultant du déplacement du véhicule.

- L'étape de classification comporte les sous étapes de :

  - Créer un vecteur de caractéristiques à partir des régions d'intérêt ;
  - Classifier ledit vecteur de caractéristiques par comparaison avec une frontière de décision déterminée préalablement lors d'une étape d'apprentissage ; et
  - Déterminer un indice de confiance associé fonction de la distance du vecteur de caractéristiques par rapport à ladite frontière de décision.

Cela permet d'associer à la région d'intérêt classifiée un indice de confiance représentant la certitude d'appartenance à une classe.

- Le vecteur de caractéristiques est un histogramme des gradients orientés d'une région d'intérêt. L'utilisation des histogrammes est simple et rapide à mettre en œuvre.

- L'étape de validation comporte les sous-étapes de :

  - Construire une carte de probabilité correspondant à une image dans laquelle chaque région d'intérêt classifiée est représentée par une distribution de probabilité ;
  - Cumuler lesdites distributions de probabilité qui se recoupent dans la carte de probabilité de manière à obtenir un maximum local ; et
  - Valider la région d'intérêt la plus proche de chaque maximum local de la carte de probabilité.

L'utilisation d'une carte de probabilité est simple et rapide à mettre en œuvre. Cela permet de cumuler les probabilités sur des régions susceptibles de représenter un piéton.

- La détection par capteur(s) s'effectue au moyen de capteurs à ultrasons. On a une couverture de détection proche du véhicule.

- La détection par capteur(s) s'effectue au moyen de capteurs radars. On a une couverture de détection plus éloignée du véhicule.

- Le procédé de détection comporte en outre une étape supplémentaire d'appliquer un changement de perspective à une image acquise. Cela permet de réduire les distorsions dans l'image acquise notamment sur des obstacles qui se trouvent à la frontière d'une image.

- Le procédé de détection comporte en outre une étape supplémentaire de suivi des régions d'intérêt validées sur une séquence d'images acquises. Cela permet de confirmer la présence d'une dite région d'intérêt validée et de lisser sa position sur toute une séquence d'images.

**EP 2 275 971 B1**

Selon un deuxième objet de l'invention, elle concerne un dispositif de détection d'un obstacle dans un environnement d'un véhicule automobile, caractérisé en ce qu'il est apte à :

Définir au moins une première région d'intérêt en effectuant une première détection d'un obstacle par reconnaissance de forme dans une image acquise dudit environnement ;

- Définir au moins une deuxième région d'intérêt en effectuant une deuxième détection d'un obstacle par détection de mouvement par rapport au véhicule sur une séquence d'images acquises dudit environnement ;
- Classifier l'obstacle détecté avec respectivement un premier et deuxième indice de confiance appliqué à la première et la deuxième régions d'intérêt par rapport à des caractéristiques données ; et
- Valider la classification sur l'objet détecté par rapport auxdits indices de confiance et par rapport auxdites régions d'intérêt résultant en des régions d'intérêt validées.

Selon un mode de réalisation non limitatif, le dispositif de détection est en outre apte à :

- Effectuer une troisième détection d'obstacle par capteur(s) avec une plage de détection inférieure à un premier seuil résultant en une position déterminée ;
- Projeter la position déterminée dans un repère de référence ;
- Projeter les régions d'intérêt validées dans ledit repère de référence ; et
- Mettre en correspondance les deux projections obtenues et attribuer une position déterminée à l'obstacle classifié en fonction de la mise en correspondance.

Selon un troisième objet de l'invention, elle concerne un produit programme d'ordinateur comportant une ou plusieurs séquences d'instructions exécutables par une unité de traitement d'information, l'exécution desdites séquences d'instructions permettant une mise en œuvre du procédé selon l'une quelconque des caractéristiques précédentes.

L'invention et ses différentes applications seront mieux comprises à la lecture de la description qui suit et à l'examen des figures qui l'accompagnent.

Celles-ci ne sont présentées qu'à titre indicatif et nullement limitatif de l'invention.

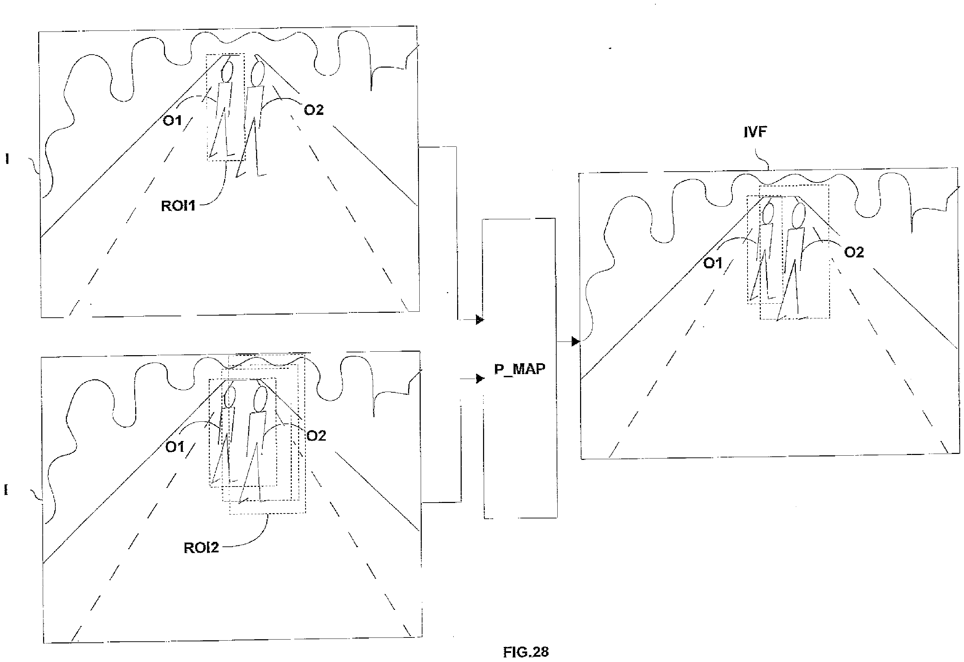

- la Fig. 1 est un organigramme d'un premier mode de réalisation non limitatif du procédé de détection selon l'invention ;
- la Fig. 2 est un organigramme du premier mode de réalisation non limitatif du procédé de détection de la Fig. 1 dans lequel une étape de détection par mouvement selon un premier mode de réalisation non limitatif est illustrée ;
- la Fig. 3 est un organigramme du premier mode de réalisation non limitatif du procédé de détection de la Fig. 1 dans lequel une étape de détection par mouvement selon un deuxième mode de réalisation non limitatif est illustrée ;
- la Fig. 4 est un organigramme du premier mode de réalisation non limitatif du procédé de détection de la Fig. 1 dans lequel une étape de détection par mouvement combinant le premier mode de réalisation de la Fig. 2 et le deuxième mode de réalisation de la Fig. 3 est illustrée ;
- la Fig. 5 est un organigramme d'un mode de réalisation non limitatif d'une étape de classification du procédé de détection des Fig. 1 à 4 ;
- la Fig. 6 est un organigramme d'un mode de réalisation non limitatif d'une étape de validation du procédé de détection des Fig. 1 à 4 ;
- les Fig. 7 et 8 illustrent schématiquement une image utilisée par une étape de changement de perspective du procédé de détection des Fig. 1 à 4 et une image résultante ;
- les Fig. 9 à 16 illustrent schématiquement des images utilisées par une étape de détection par reconnaissance de forme du procédé de détection des Fig. 1 à 4 ;
- les Fig. 17 à 19 illustrent schématiquement des images utilisées par un premier mode de réalisation non limitatif d'une étape de détection par mouvement du procédé de détection des Fig. 1, 2 et 4 ;
- la Fig. 20 illustre le principe d'un déplacement d'un point dans l'image lors du déplacement d'une caméra et utilisé dans les étapes de détection par mouvement des Fig. 21 à 24 ;
- les Fig. 21 à 24 illustrent schématiquement des images utilisées par un deuxième mode de réalisation non limitatif d'une étape de détection par mouvement du procédé de détection des Fig. 1, 3 et 4 ; 5 ;
- la Fig. 25 représente schématiquement un histogramme de gradients orientés utilisé par un mode de réalisation non limitatif d'une étape de classification d'obstacles du procédé de détection des Fig. 1 à 4 ;
- les Fig. 26 et 27 sont des schémas de répartition d'indice de confiance explicatifs d'un mode de réalisation non limitatif d'une étape de classification d'obstacles du procédé de détection des Fig. 1 à 4 ;
- la Fig. 28 est un schéma explicatif d'un mode de réalisation non limitatif d'une étape de validation d'une classification d'obstacles du procédé de détection des Fig. 1 à 4 ;
- la Fig. 29 est une représentation schématique en 3D de fonctions gaussiennes expliquant leur utilisation dans l'étape

5

de validation de la Fig. 28 ;

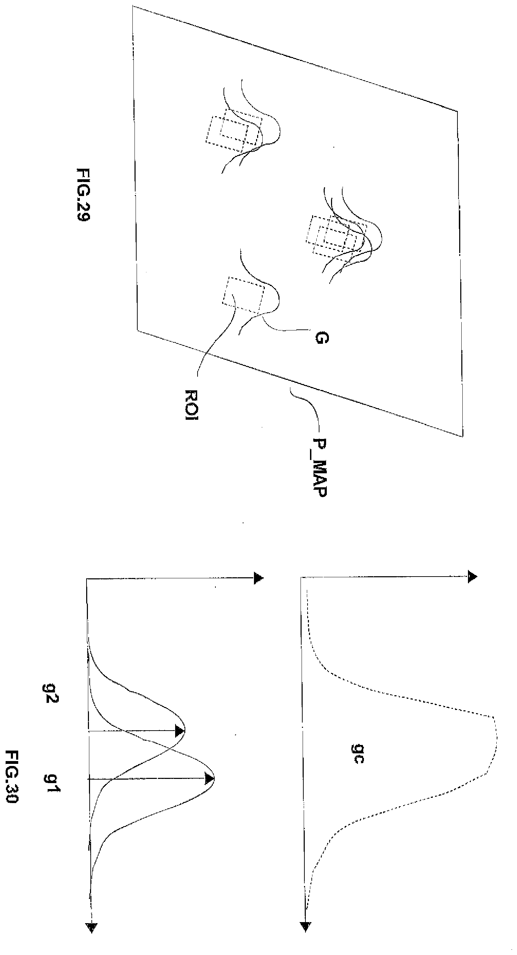

- la Fig. 30 est une représentation schématique en 2D de fonctions gaussiennes expliquant leur utilisation dans l'étape de validation de la Fig. 28 ;

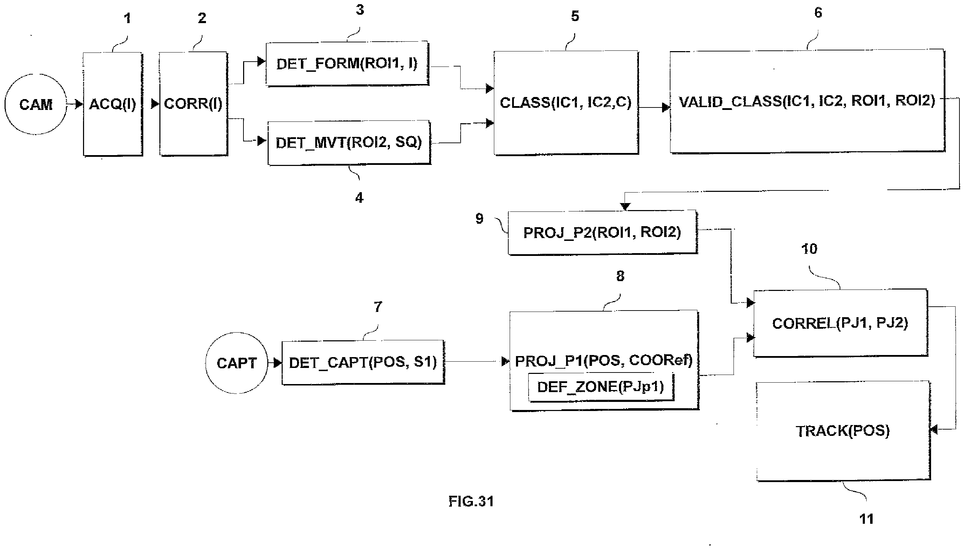

- la Fig. 31 est un organigramme d'un deuxième mode de réalisation non limitatif du procédé de détection selon l'invention ;

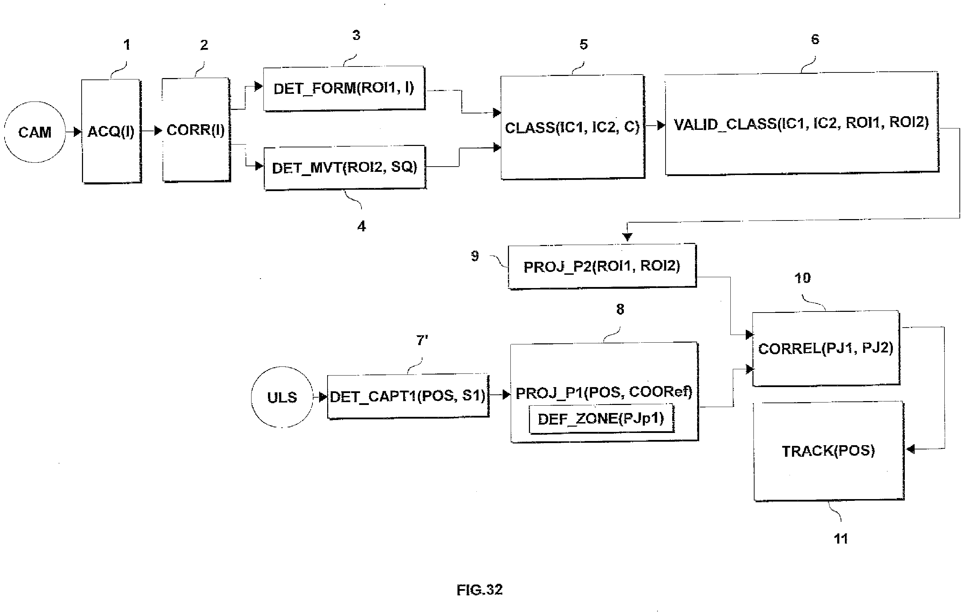

- la Fig. 32 est un organigramme du deuxième mode de réalisation non limitatif du procédé de détection de la Fig. 31 dans lequel une étape de détection par capteur selon un premier mode de réalisation non limitatif est illustrée ;

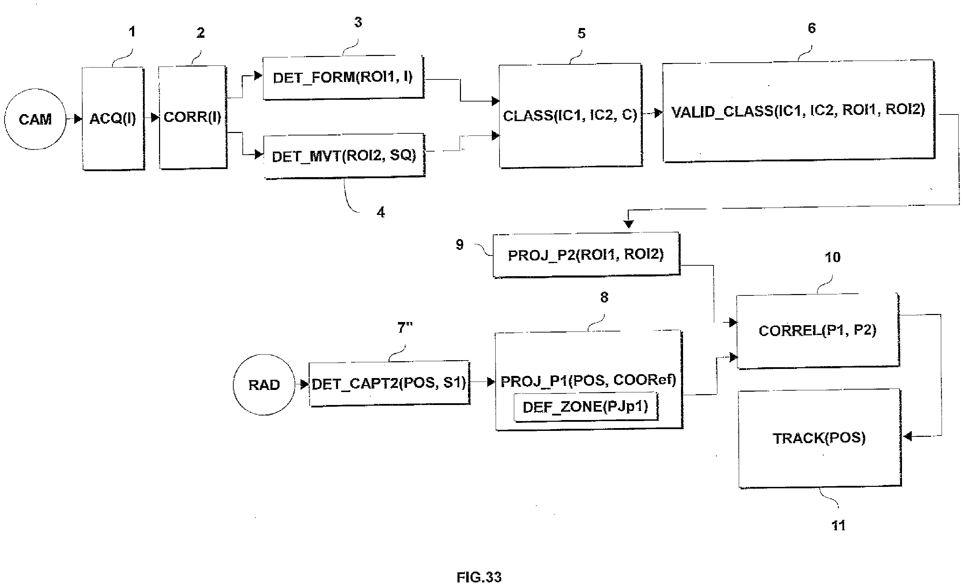

- la Fig. 33 est un organigramme du deuxième mode de réalisation non limitatif du procédé de détection de la Fig. 31 dans lequel une étape de détection par capteur selon un deuxième mode de réalisation non limitatif est illustrée ;

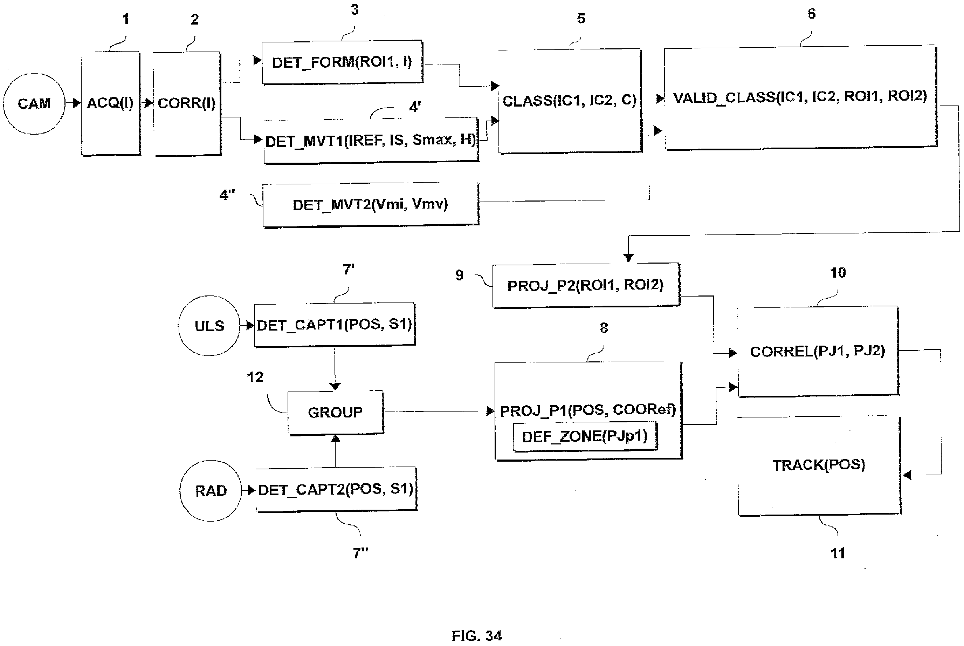

- la Fig. 34 est un organigramme du deuxième mode de réalisation non limitatif du procédé de détection de la Fig. 31 dans lequel une étape de détection par capteur combinant le premier mode de réalisation de la Fig. 32 et le deuxième mode de réalisation de la Fig. 33 est illustrée ;

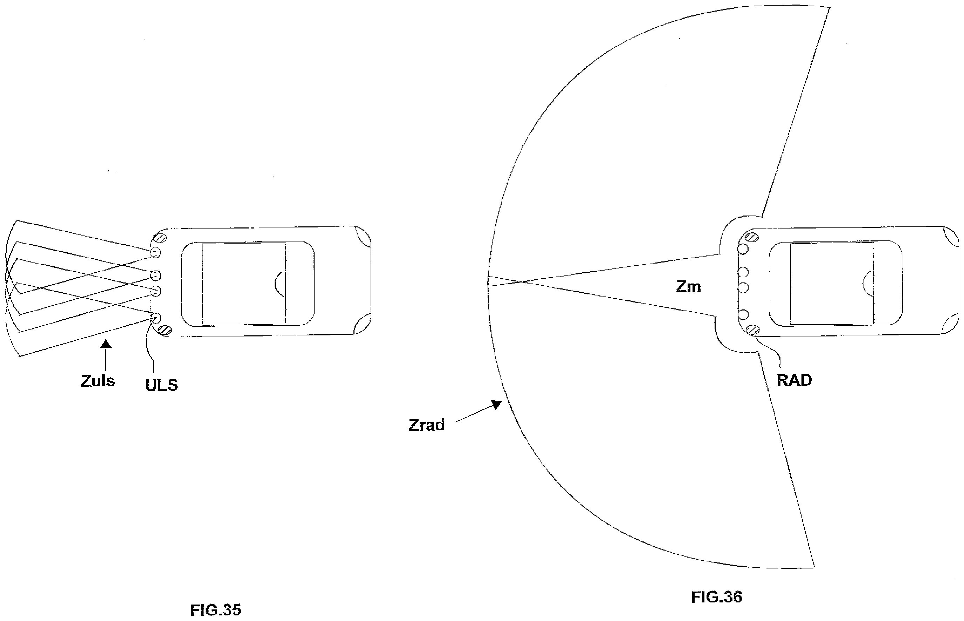

- la Fig. 35 illustre schématiquement un véhicule comportant un dispositif de détection par capteurs à ultrasons selon un premier mode de réalisation non limitatif utilisé par le procédé de détection des Fig. 32 et 34 et une zone de détection dudit dispositif de détection ;
- la Fig. 36 illustre schématiquement un véhicule comportant un dispositif de détection par capteurs radars selon un deuxième mode de réalisation non limitatif utilisé par le procédé de détection des Fig. 33 et 34 et une zone de détection dudit dispositif de détection ;

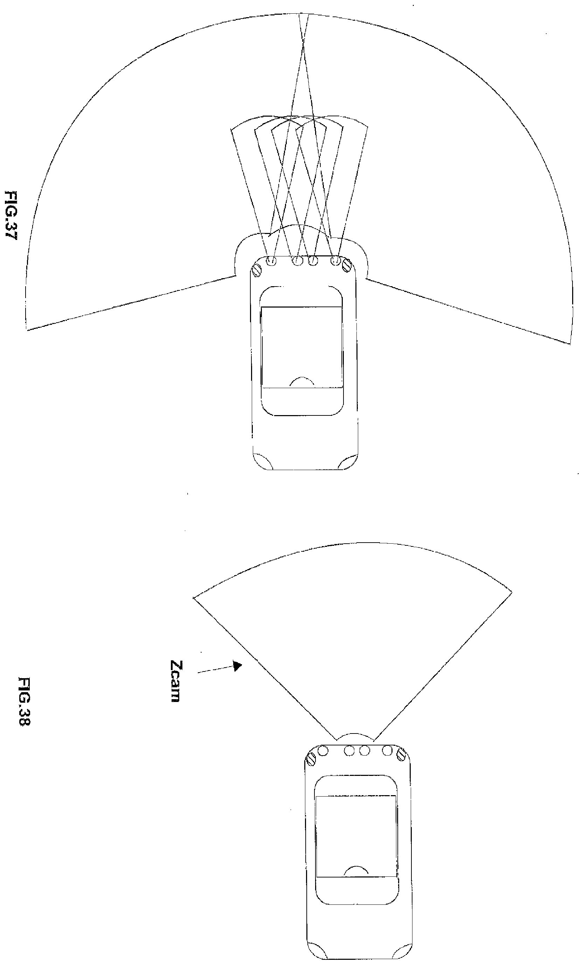

- la Fig. 37 illustre schématiquement un véhicule comportant des dispositifs de détection par capteurs à ultrasons de la Fig. 35 et par capteurs radars de la Fig. 36 et leur zone de détection respective ;

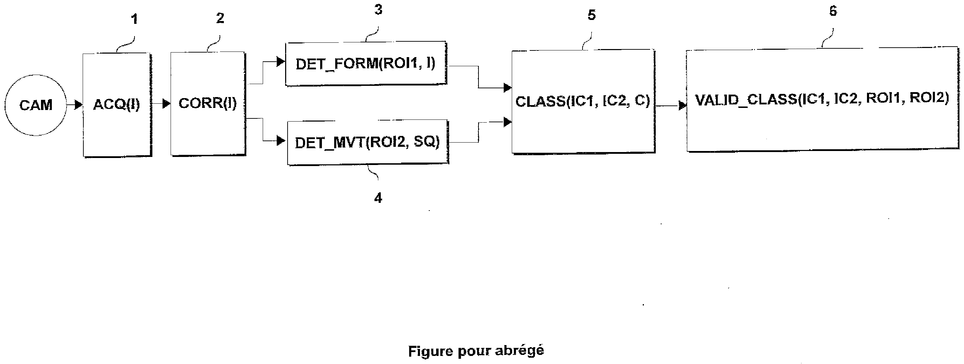

- la Fig. 38 illustre schématiquement un véhicule comportant un dispositif d'acquisition d'image utilisé par le procédé de détection des Fig. 1 à 4 et une zone de détection dudit dispositif d'acquisition ;

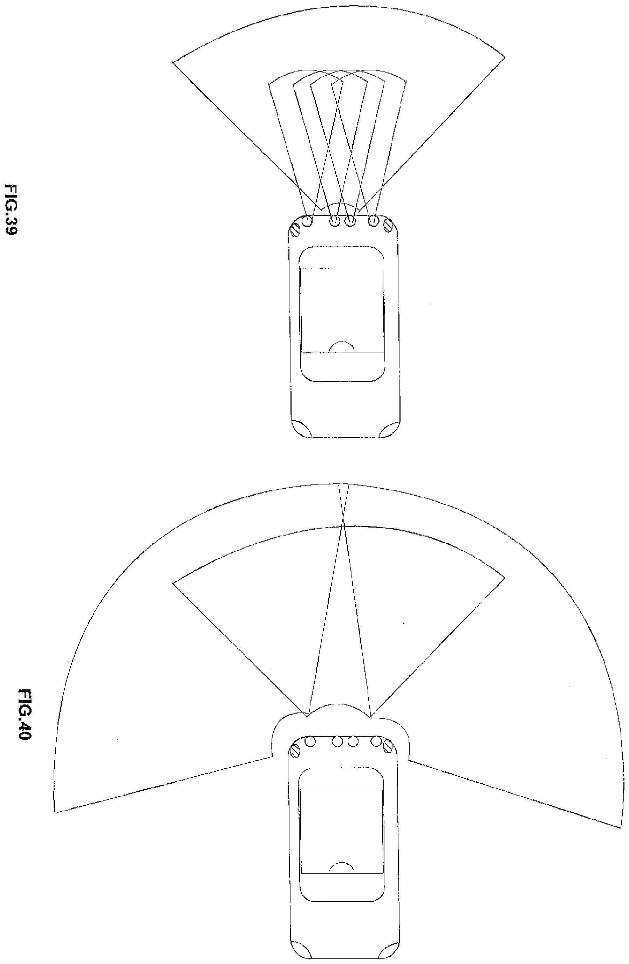

- la Fig. 39 illustre schématiquement un véhicule comportant un dispositif d'acquisition d'image de la Fig. 38 et un dispositif de détection par capteurs à ultrasons de la Fig. 35 ainsi que leur zone de détection respective ;
- la Fig. 40 illustre schématiquement un véhicule comportant un dispositif d'acquisition d'image de la Fig. 38 et un dispositif de détection par capteurs radars de la Fig. 36 ;

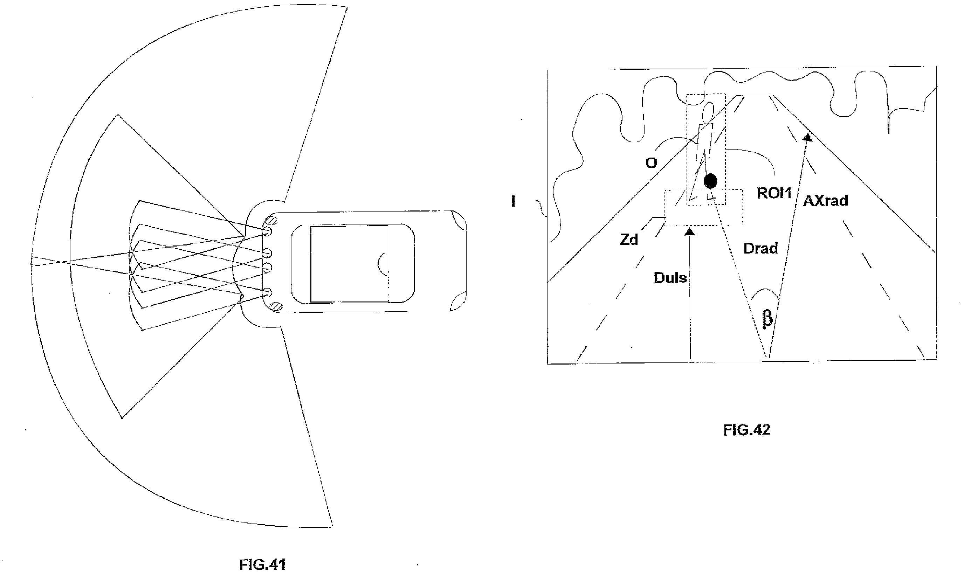

- la Fig. 41 illustre schématiquement un véhicule comportant un dispositif d'acquisition d'image de la Fig. 38, un dispositif de détection par capteurs à ultrasons de la Fig. 35 et un dispositif de détection par capteurs radars de la Fig. 36 ;
- La Fig. 42 illustrent un obstacle ainsi que des paramètres relatifs à sa position et détectés par un dispositif de détection par capteurs à ultrasons de la Fig. 35 et par un dispositif de détection par capteurs radars de la Fig. 36 ;

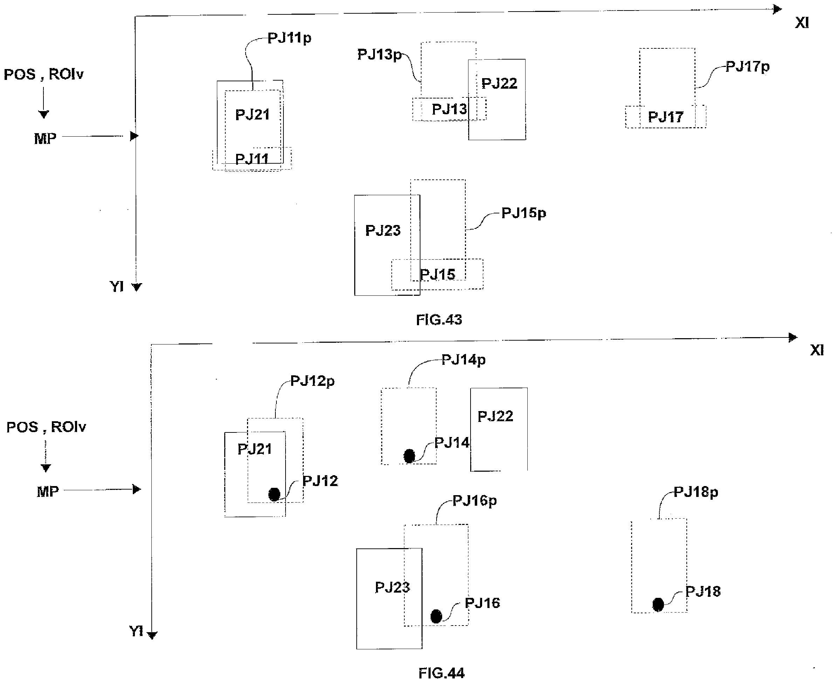

- Les Fig. 43 et 44 sont des schémas explicatifs de projections dans un repère de référence de positions et de régions d'intérêt relatifs à des détections d'obstacles, lesdites projections résultant d'une étape de projection du procédé de détection des Fig. 31 à 34 ;

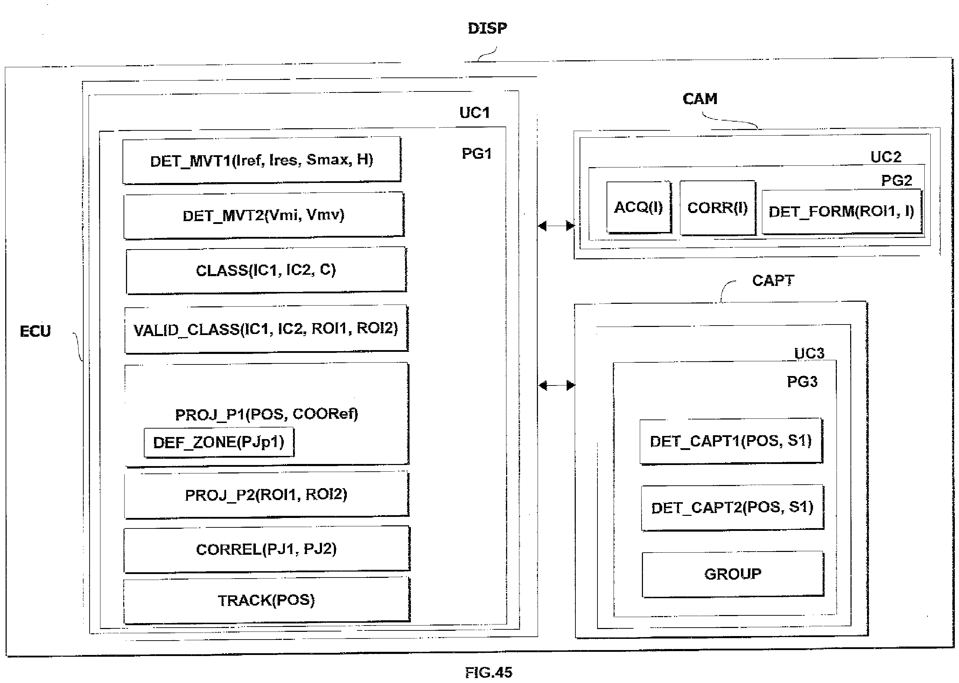

- la Fig. 45 est un bloc diagramme fonctionnel d'un mode de réalisation non limitatif d'une architecture d'un dispositif de détection de mise en œuvre du procédé des Fig. 31 à 34.

Dans toutes les figures, les éléments communs portent les mêmes numéros de référence.

Le procédé de détection d'un obstacle dans un environnement d'un véhicule automobile selon l'invention est décrit dans un premier mode de réalisation non limitatif à la Fig. 1.

On notera que par véhicule automobile, on entend tout type de véhicule motorisé.

Premier mode de réalisation

Selon ce premier mode de réalisation, le procédé de détection comporte les étapes suivantes telles qu'illustrées à la Fig. 1 :

- Définir au moins une première région d'intérêt ROI1 en effectuant une première détection d'un obstacle O par reconnaissance de forme dans une image acquise I dudit environnement E (étape DET_FORM(ROI1, I)) ;
- Définir au moins une deuxième région d'intérêt ROI2 en effectuant une deuxième détection d'un obstacle O par détection de mouvement par rapport au véhicule V sur une séquence d'images SQ acquises I dudit environnement E (étape DET_MVT(ROI2, SQ)) ;
- Classifier l'obstacle O détecté avec respectivement un premier IC1 et deuxième IC2 indice de confiance appliqué à la première ROI1 et la deuxième ROI2 régions d'intérêt par rapport à des caractéristiques données C (étape CLASS(IC1, IC2, C)) ; et
- Valider la classification sur l'objet détecté O par rapport auxdits indices de confiance IC1, IC2 et par rapport auxdites régions d'intérêt ROI1, ROI2 (étape VALID_CLASS(IC1, IC2, ROI1, ROI2)).

Dans un mode de réalisation non limitatif, le procédé de détection comporte en outre une étape supplémentaire d'appliquer un changement de perspective à une image acquise (étape CORR(I)).

Dans un mode de réalisation non limitatif, le procédé de détection comporte en outre une étape d'acquisition d'une séquence SQ d'images I. On notera que cette étape peut être effectuée en amont par un autre procédé.

Pour la suite de la description, dans le mode de réalisation non limitatif du procédé décrit, le procédé comprend ces étapes supplémentaires d'acquisition d'images et de changement de perspective.

Les étapes du procédé sont décrites en détail ci-après.

**Dans une première étape 1),** on acquière une séquence SQ d'images I de l'environnement E d'un véhicule V.

L'acquisition se fait au moyen d'une caméra CAM.

Les méthodes d'acquisition d'images étant connues de l'homme du métier, elles ne sont pas décrites ici.

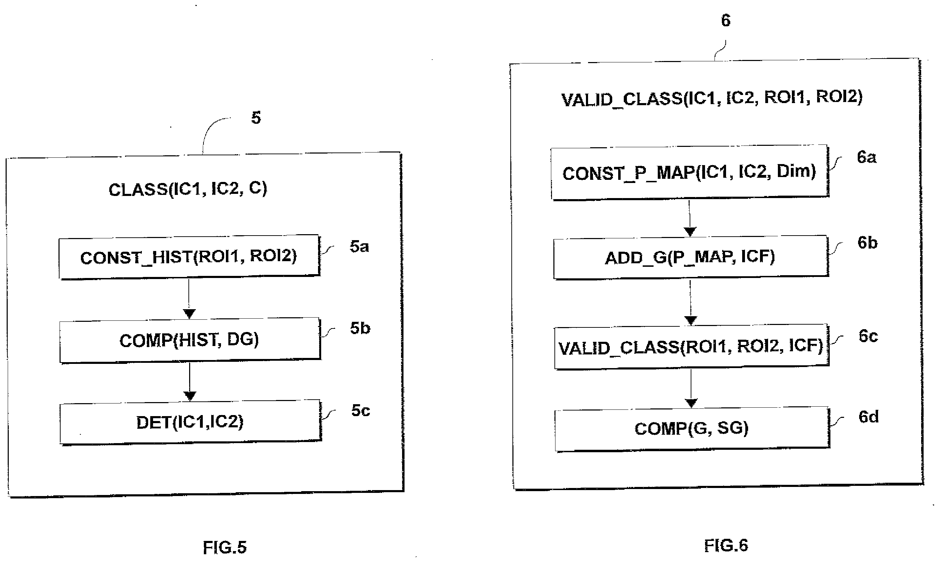

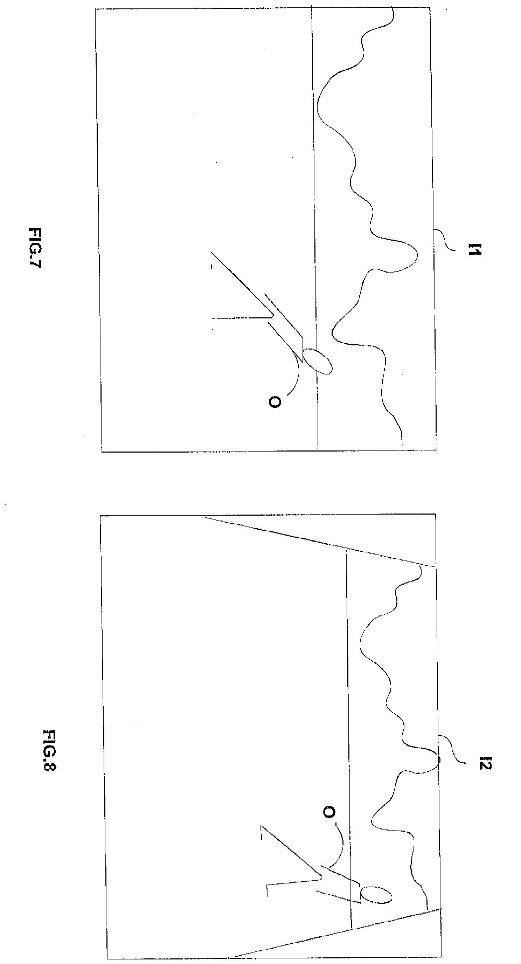

**Dans une deuxième étape 2),** on applique un changement de perspective à une image acquise I. Cela permet de contrebalancer les distorsions dues à la caméra CAM. On redresse ainsi les obstacles O qui se trouvent en bordure d'image I. Tel qu'illustré dans un exemple schématique à la Fig. 7 et la Fig. 8, à partir d'une image acquise I1, on obtient une correction d'image résultant en une image acquise I2.

**Dans une troisième étape 3),** on définit au moins une première région d'intérêt ROI1 en effectuant une première détection d'un obstacle O par reconnaissance de forme dans une image acquise I dudit environnement E.

Dans un mode de réalisation, la première détection par reconnaissance de forme utilise une méthode bien connue de l'homme du métier appelée « AdaBoost» et décrite dans le document « an introduction to Boosting and Leveraging by Ron Meir and Gunnar Rätsch - Departement of Electrical Engineering, Technion, Haifa 32000 Israel / research School of Information Science & Engineering - the australian National University, Canberra, ACT 0200, Australia ».

Cette méthode se base sur :

1) une étape initiale d'apprentissage qui utilise :

- une reconnaissance de forme au moyen d'une série de vignettes VIGN de référence de taille déterminée Sz. Dans l'exemple présent, on se base sur une vignette VIGN représentative d'un obstacle O qui est un piéton. Ainsi, dans un exemple non limitatif, la vignette VIGN comporte une taille Sz de 48*24 pixels Px. La série de vignettes comprend un ensemble de vignettes dites positives dans lesquelles un piéton est présent, et un ensemble de vignettes dites négatives dans lesquelles aucun piéton n'est présent ; et

- un algorithme génétique (appelé « genetic algorithm » en anglais) qui permet d'obtenir un ensemble de classificateurs forts CLs (appelés « strong classifier » en anglais), un classificateur fort CLs comprenant une somme d'une pluralité de classificateurs faibles CLw (appelés « weak classifier » en anglais). L'obtention des classificateurs faibles CLw et forts CLs est basée sur une comparaison pixel à pixel dans la série de vignettes VIGN de référence.

A chaque classificateur fort CLs est associé un poids qui est représentatif d'un taux de bonnes détections d'un obstacle par rapport la série de vignette VIGN pour une pluralité de classificateurs faibles donnée.

Un classificateur faible CLw se compose d'un test unitaire relatif à une comparaison d'un pixel par rapport à un autre pixel dans la même vignette. Un poids lui est également associé.

L'algorithme génétique permet de calculer des combinaisons de classificateurs faibles CLw appliqués à la série de vignette VIGN de référence qui permettent d'atteindre le taux de bonnes détections associées aux classificateurs fort CLs.

On notera que cette étape d'apprentissage peut être effectuée en amont du procédé de détection décrit.

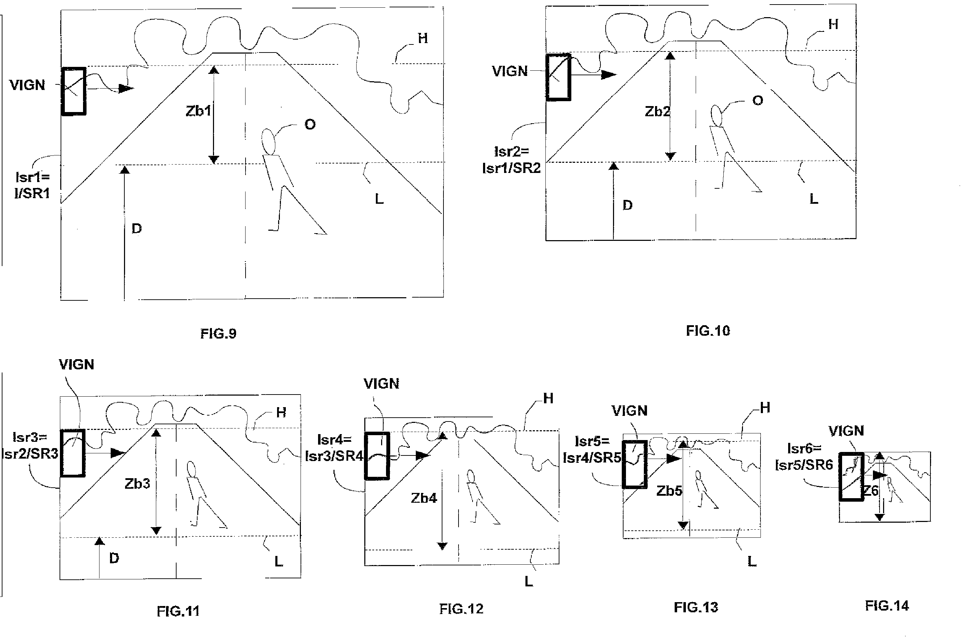

2) Une utilisation de la méthode « AdaBoost » comportant les étapes suivantes, telle qu'illustrée sur les Fig. 9 à 16.

a) Construire une pyramide d'images Isr par sous échantillonnage récursif d'une image acquise I.

En pratique, on applique une échelle de réduction SR résultant en une image sous-échantillonnée Isr, telle qu'illustrée sur la Fig. 9 et pour sur cette image on applique de nouveau une échelle de réduction SR et ainsi de suite.

Dans un mode de réalisation non limitatif, à chaque itération, une échelle de réduction SR différente est utilisée, telle qu'illustrée sur les Figs. 9 à 14. Cela permet d'adapter les distances de détection d'un obstacle O que l'on veut atteindre et donc d'atteindre les obstacles qui se trouvent à différentes distances dans l'image I.

Ainsi, dans des exemples non limitatifs, illustrés en figures 9 à 14 :

- pour l'image acquise I, l'échelle de réduction appliquée SR1 est de 1,2, résultant en la première image sous-échantillonnée Isr1 ;

- pour l'image sous-échantillonnée Isr1, l'échelle de réduction appliquée SR2 est de 2, résultant en une deuxième image sous-échantillonnée Isr2 ;

- pour l'image sous-échantillonnée Isr2, l'échelle de réduction appliquée SR3 est de 2,3 résultant en une troisième image sous-échantillonnée Isr3 ;
- pour l'image sous-échantillonnée Isr3, l'échelle de réduction appliquée SR4 est de 3, résultant en une deuxième image sous-échantillonnée Isr4 ;
- pour l'image sous-échantillonnée Isr4, l'échelle de réduction appliquée SR5 est de 4, résultant en une cinquième image sous-échantillonnée Isr5 ;
- pour l'image sous-échantillonnée Isr5, l'échelle de réduction appliquée SR6 est de 5, résultant en une sixième image sous-échantillonnée Isr6.

On notera qu'une échelle de réduction SR est prise en fonction de la distance à laquelle on veut détecter un obstacle O dans une image acquise I ou réduite Isr.

Les exemples non limitatifs donnés ci-dessus permettent d'effectuer une détection d'un obstacle O entre 0 et 9 mètres à partir du véhicule V considéré.
b) Pour chaque image sous-échantillonnée Isr :

- On balaye ladite image Isr avec une vignette VIGN représentative d'un obstacle déterminé O, ici un piéton. La vignette VGN a une taille déterminée Sz représentative du piéton. Dans un exemple non limitatif, le balayage s'effectue de gauche à droite et de haut en bas.
- A chaque position successive d'une vignette VIGN dans ladite image Isr, on analyse son contenu au moyen d'un ensemble de classificateurs Cls, Clw, lesdits classificateurs étant déterminés lors d'une phase d'apprentissage préalable, tel que décrite précédemment.

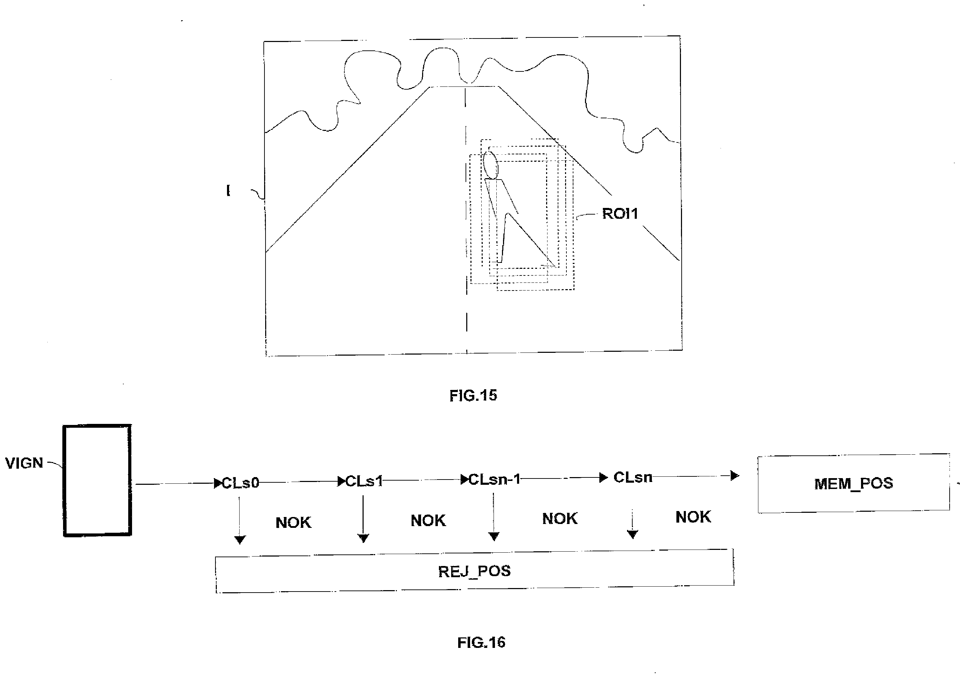

Ainsi, lors du balayage, pour chaque position POS de la vignette dans une image Isr, on effectue les sous-étapes suivantes illustrées à la Fig.16 (représentatives de l'utilisation de la méthode « AdaBoost»).

i) On applique la combinaison des classificateurs faibles CLw d'un premier classificateur fort CLs0 sur ladite vignette VIGN à la position courante POS ;
On cumule les poids des classificateurs faibles CLw dont les tests unitaires associés sont validés, i.e. positifs ;
On compare le cumul avec le poids du classificateur fort CLs0.
ii) Si le résultat est négatif (c'est-à-dire que le cumul est inférieur au poids du classificateur fort CLs0), on rejette la position POS de la vignette VIGN (étape REJ_POS). Cela signifie que la vignette VIGN à la position courante ne comporte aucun obstacle O qui est ici un piéton. On passe à la position suivante POS de la vignette.
iii) Si le résultat est positif (c'est-à-dire que le cumul est supérieur au poids du classificateur fort CLs0), on applique le classificateur fort CLs1 suivant et on réitère l'étape i). Tant que le résultat est positif, on passe au classificateur fort suivant CLsn.
Lorsque tous les classificateurs forts CLs ont donné un résultat positif, cela signifie que la vignette VIGN à la position courante comporte un obstacle O qui est ici un piéton. Dans ce cas, on mémorise la position POS de la vignette VIGN (étape MEM_POS illustrée) et on passe à la position suivante de la vignette VIGN.

On réitère les étapes i) à iii) pour chaque position POS d'une vignette VIGN dans l'image Isr.
On obtient ainsi, le cas échéant, pour l'image sous-échantillonnée Isr un ensemble de positions POS mémorisées.
Ainsi, on obtient un ensemble de positions POS mémorisées d'une vignette VIGN dans chaque image acquise ou sous-échantillonnée. Chaque position mémorisée POS d'une vignette VIGN représente ainsi une première région d'intérêt ROI1.
Sur les figures 9 à 14, la vignette est délimitée par un rectangle. Bien entendu, il est possible de lui conférer des formes différentes.
On notera que plus on augmente la valeur d'une échelle de réduction SR, plus on détecte des obstacles, ici des piétons, qui sont proches du véhicule V.
Ainsi, pour la première image sous-échantillonnée Isr1, ce sont les obstacles lointains (qui entrent dans la vignette VIGN) qui seront détectés, tandis que dans l'image Isr5 et l'image Isr6, ce sont les obstacles proches (qui entrent dans la vignette VIGN) qui seront détectés. Sur l'exemple non limitatif des Fig. 9 à 14, on peut voir que le piéton O représenté sera détecté uniquement dans l'image Isr5 et l'image Isr6, car dans ces deux images, il sera compris dans la vignette VIGN.
On notera que dans un autre mode de réalisation, on peut alterner la sous-étape de sous-échantillonnage avec la sous-étape de balayage et d'analyse.
c) Cet ensemble de premières régions d'intérêt ROI1 est repositionné dans l'image acquise I initiale, tel qu'illustré sur la Fig. 15 en multipliant lesdites premières régions d'intérêt ROI1 par l'échelle de réduction SR associée à l'image à partir desquelles elles ont été calculées.

Dans un mode de réalisation non limitatif, la première détection par reconnaissance de forme comporte une sous-étape de déterminer une zone de balayage Zb dans une image sous-échantillonnée Isr. Cette sous-étape est appliquée pour chaque image sous-échantillonnée Isr2 à Isr6 également. Cela permet de réduire le temps de traitement. En effet, on évite ainsi de balayer des endroits dans une image I où l'on sait que l'on ne pourra pas détecter un obstacle O dans une vignette VIGN car :

- l'obstacle O est plus grand que ladite vignette VIGN ;
- l'obstacle O ne pourra se trouver dans une partie de l'image en dehors de la zone, ladite partie représentant le ciel.

Ainsi, dans un mode de réalisation non limitatif, la zone de balayage Zb comporte :

- une ligne supérieure H délimitant une frontière au-delà de laquelle aucun obstacle O ne peut être détecté dans l'image au moyen de la vignette VIGN ; et
- une ligne inférieure L délimitant une frontière au-delà de laquelle aucun obstacle O ne peut être détecté dans l'image au moyen de la vignette VIGN.

Comme on peut le voir sur les Fig. 9 à 14, on a déterminé les zones de balayage Zb1, Zb2, Zb3, Zb4, Zb5 et Z6 (représentées par deux lignes horizontales en pointillés) respectivement pour les images sous-échantillonnées Isr1, Isr2, Isr3, Isr4, Isr5 et Isr6.

Dans des exemples non limitatifs :

- dans l'image sous-échantillonnée Isr1, la ligne inférieure de la zone de balayage Zb1 a été placée à une distance D de 10 mètres,
- dans l'image sous-échantillonnée Isr2, la ligne inférieure de la zone de balayage Zb2 a été placée à une distance D de 6 mètres,
- dans l'image sous-échantillonnée Isr3, la ligne inférieure de la zone de balayage Zb3 a été placée à une distance D de 3,5 mètres,
- dans l'image sous-échantillonnée Isr4, la ligne inférieure de la zone de balayage Zb4 a été placée à une distance D de 2 mètres,
- dans l'image sous-échantillonnée Isr5, la ligne inférieure de la zone de balayage Zb5 a été placée à une distance D de 1 mètre,
- dans l'image sous-échantillonnée Isr6, la ligne inférieure de la zone de balayage Z6 a été placée à la frontière inférieure de l'image Isr6.

**Dans une quatrième étape 4),** on définit au moins une deuxième région d'intérêt ROI2 en effectuant une deuxième détection d'un obstacle O par détection de mouvement par rapport au véhicule V sur une séquence d'images acquises I dudit environnement E.

Premier mode de réalisation

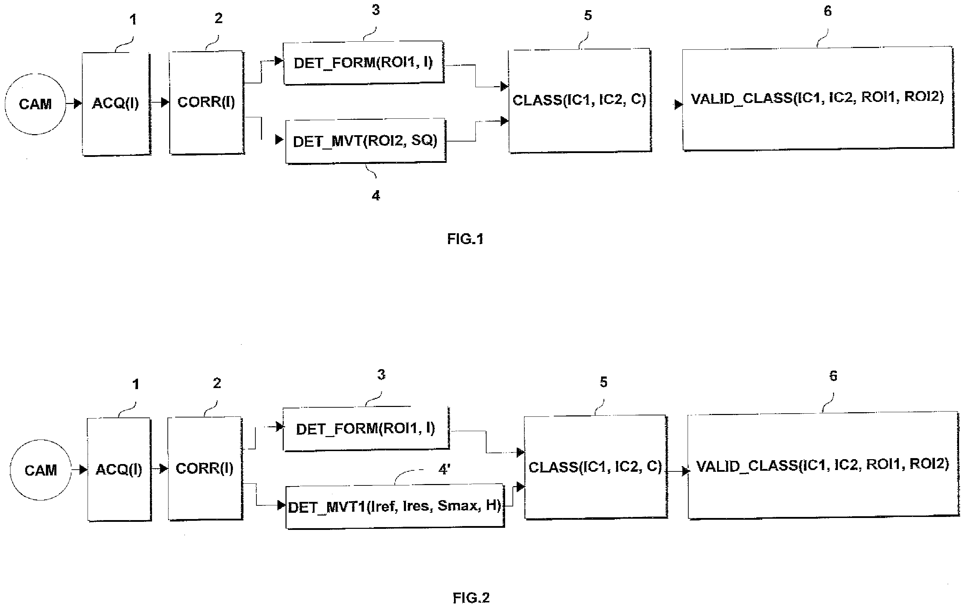

Dans un premier mode de réalisation non limitatif, la deuxième détection (étape DET_MVT1 (Iref, Ires, Smax, H) illustré à la Fig. 2) comporte les sous-étapes suivantes.

a) Construire une image d'arrière-plan Iref recalculée pour chaque image I d'une séquence d'image SQ.

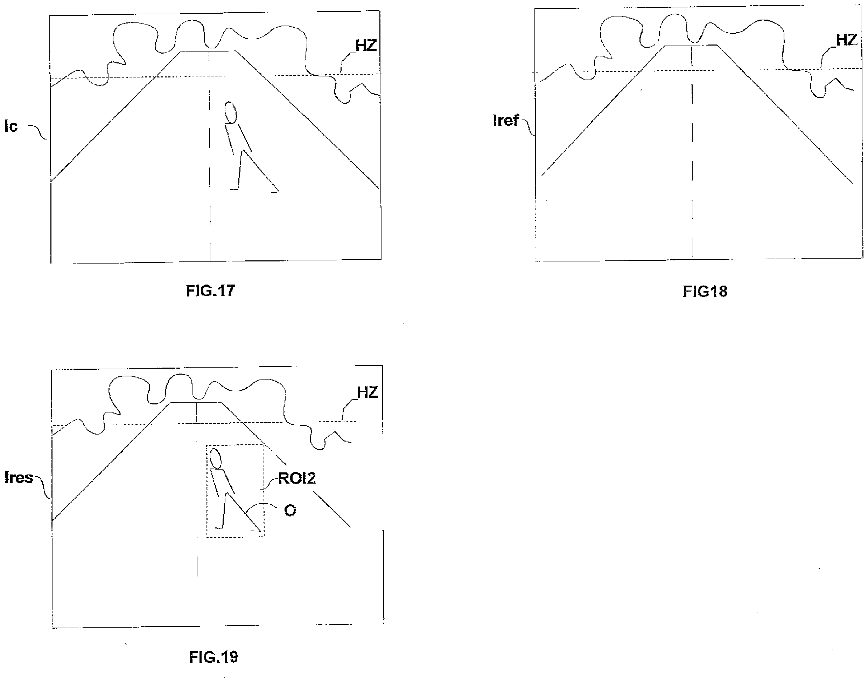

Dans un mode de réalisation non limitatif, cette étape utilise une méthode bien connue de l'homme du métier appelée « Running Average Method » et décrite dans le document G. Christogiannopoulos, P. B. Birch, R. C. D. Young, C. R. Young, "Segmentation of moving objects from cluttered background scenes using a running average model". SPIE Journal, vol 5822, pp. 13-20. 2005. Ainsi, tel qu'illustré sur l'exemple non limitatif des Fig. 17 à 19, dans un mode de réalisation non limitatif, pour chaque image acquise courante Ic (d'une séquence d'images SQ) dans lequel se trouve au moins un obstacle O, ici un piéton, on calcule une image d'arrière-plan Iref telle que :

$$\text{Iref} = \alpha * \text{Ic} + (1-\alpha)*\text{Iref}.$$

Avec a un pourcentage d'apprentissage.

Dans un exemple non limitatif, $\alpha = 0.05$

Ce pourcentage d'apprentissage signifie que l'on garde 5% de la nouvelle image Ic et 95% de l'image précédente Iref.

Autrement dit, l'arrière-plan évolue en fonction du mouvement des objets (comportant les obstacles) dans l'image. On notera que la première image d'arrière-plan Iref est la première image acquise I dans la séquence acquise SQ.

b) Soustraire l'image d'arrière-plan Iref à l'image courante Ic dans la séquence d'image SQ résultant en une image résultante Ires.

Après l'obtention de l'image d'arrière-plan Iref, on soustrait donc la première image courante Ic à cette image d'arrière-plan Iref et on obtient une image résultante Ires.

On a ainsi Ires = Valeur absolue (Ic-Iref).

On effectue cette étape sur l'ensemble des images acquises I de la séquence d'images SQ.

c) Discriminer des mouvements déterminés dans l'image résultante Ires en fonction d'un seuil Smax.

Dans une variante de réalisation non limitative, on compare l'intensité de chaque pixel de l'image résultante Ires avec ledit seuil Smax. Si l'intensité est supérieure au seuil Smax, cela signifie qu'il existe du mouvement dans l'image résultante Ires.

d) Extraire des deuxièmes régions d'intérêt ROI2 à partir de la discrimination.

A cet effet, dans une variante de réalisation non limitative, on binarise l'image résultante de la manière suivante :

On compare tous les pixels Px d'une image résultante Ires à un seuil d'intensité maximum Sbr représentatif du bruit BR.

- Si la valeur d'un pixel Px est inférieure à ce seuil d'intensité Sbr, on positionne sa valeur à zéro (noir) dans un exemple non limitatif,
- Sinon on positionne sa valeur à 255 (blanc) dans un exemple non limitatif.

Dans un exemple non limitatif, afin de définir le seuil d'intensité Sbr :

- on extrait de chaque image résultante Ires la valeur maximale d'intensité de niveaux de gris.
- on établit la valeur du seuil d'intensité Sbr égale à un pourcentage de cette valeur maximale, le pourcentage étant représentatif du bruit BR.

Dans un exemple non limitatif, le pourcentage est de 20%.

Ainsi, en effectuant une binarisation de l'image résultante Ires, on fait disparaître le bruit BR et on fait apparaître des deuxièmes régions d'intérêt ROI2 représentatives d'un obstacle O en mouvement.

On distingue ainsi un obstacle O en mouvement du bruit.

On notera que le bruit BR peut être par exemple l'ombre au sol d'un arbre qui bouge en raison du vent ou encore un changement d'intensité lumineuse sur l'image due par exemple à des nuages en mouvement.

Dans un mode de réalisation non limitatif, la deuxième détection DET_MVT1 comporte en outre les étapes suivantes.

a) Regrouper les régions d'intérêt ROI2 de chaque image résultante Ires qui se recoupent entre elles. Les régions d'intérêt ROI2 qui se recoupent entre elles sont en effet représentatives d'un même obstacle O.

b) Définir des rectangles autour de ces deuxièmes régions d'intérêt ROI2 obtenues, ces rectangles définissant maintenant lesdites deuxièmes régions d'intérêt ROI2.

Dans un mode de réalisation non limitatif, pour déterminer le rectangle, on prend les extrémités minimum et maximum d'une région d'intérêt ROI2.

Dans un mode de réalisation non limitative, les régions d'intérêt ROI2 qui sont situées au dessus d'une ligne caractéristique de l'horizon HZ (illustrée sur les Fig. 17 à 19) dans une image acquise I ne sont pas prises en compte. En effet, on sait qu'aucun obstacle tel qu'un piéton ne peut se trouver au dessus de la ligne d'horizon HZ.

Deuxième_mode de réalisation

Dans un deuxième mode de réalisation non limitatif tel qu'illustré sur la Fig. 3 (étape DET_MVT2(Vmi, Vmv), la deuxième détection par mouvement comporte les sous-étapes suivantes.

A) Déterminer des points d'intérêt Ptl sur une image acquise I ;
B) Suivre ces points d'intérêt Ptl sur l'image suivante I+1 et déterminer leur déplacement ;

C) Regrouper en deuxièmes régions d'intérêt ROI2 lesdits points d'intérêt PtI ayant un déplacement similaire Vmi ;
D) Déterminer le déplacement Vmv du véhicule V ; et
E) Discriminer des deuxièmes régions d'intérêt ROI2 ayant un mouvement Vmi dans l'image I non résultant du déplacement du véhicule Vmv.

Ces sous-étapes sont décrites ci-après.

A) Déterminer des points d'intérêt PtI.

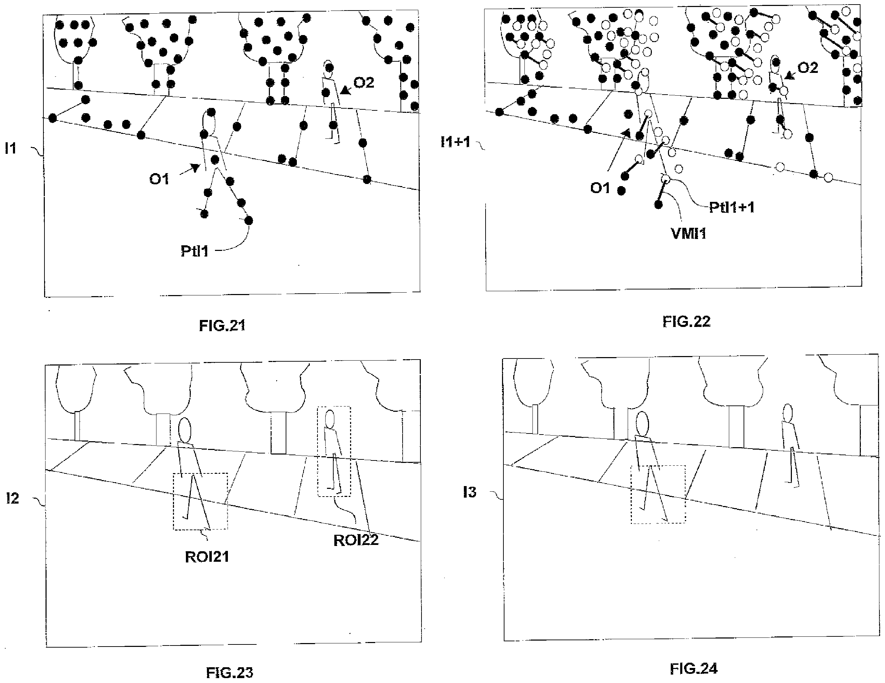

A cet effet, dans un mode de réalisation non limitatif, on utilise une méthode bien connue de l'homme du métier appelée « Harris Corner ». On obtient la position en x,y d'un point d'intérêt PtI.
Comme on peut le voir sur l'exemple schématique non limitatif de la Fig. 21, sur une image acquise I1, on a déterminé des points d'intérêt PtI (points noirs).

B) Suivi des points d'intérêt PtI.

A partir du suivi des points d'intérêt PtI d'une image I dans une image suivante I+1, on en déduit les vecteurs de déplacement Vmi de ces points d'intérêt PtI sur une image I et sur l'image suivante I+1.
Dans un mode de réalisation non limitatif, on utilise une méthode bien connue de l'homme du métier appelée « méthode de Lucas Kanade » décrite dans le document B.D. Lucas and T. Kanade "An Iterative Image Registration Technique with an Application to Stereo Vision" IJCAI '81 pp. 674-679 ».
Comme on peut le voir sur l'exemple schématique non limitatif de la Fig. 22, sur une image acquise suivante I1+1, on a également déterminé la nouvelle position des points d'intérêt PtI (points blancs) et on a déterminé les vecteurs de déplacement Vmi des points d'intérêt PtI. Par exemple à l'image I1, sur un premier obstacle O1, on a le point d'intérêt PtI1 qui s'est déplacé sur l'image suivante I1+1 et a donné le point d'intérêt PtI1+1. Ces deux points d'intérêt correspondant à un même élément de l'environnement acquis à un instant différent donnent le vecteur de déplacement Vmi1.
On notera que les sous-étapes A) et B) sont décrites plus en détail dans le document « the Computation of Optical flow - S.S Beauchemin and J.L Barron, University of Western Ontario - ACM Computing Surveys, Vol 27, N°3, September 1995. Cette méthode « optical flow » étant bien connue de l'homme du métier, elle n'est pas décrite plus en détail ici.

C) Regroupement en deuxièmes régions d'intérêt ROI2.

On regroupe ainsi des points d'intérêt PtI qui ont des vecteurs de déplacement identiques Vmi, à savoir :

-     qui se déplacent dans la même direction ;
-     qui ont une norme équivalente (déplacement similaire en nombre de pixels Px).

A cet effet, dans un mode de réalisation non limitatif, on utilise une méthode bien connue de l'homme du métier appelée étiquetage en composantes connexes (ou « labelization » en anglais).
A partir de ces regroupements, on détermine des deuxièmes régions d'intérêt ROI2. A cet effet, on prend les points d'extrémité des vecteurs de déplacement regroupés.
Dans l'exemple schématique de la Fig. 22, on a ainsi deux régions d'intérêt ROI21, ROI22 correspondant respectivement à :

-     un obstacle O1 qui est un piéton dont on a observé un déplacement ;
-     un obstacle O2 qui est un piéton dont on a observé un déplacement.

D) Déterminer le déplacement Vmv du véhicule V.

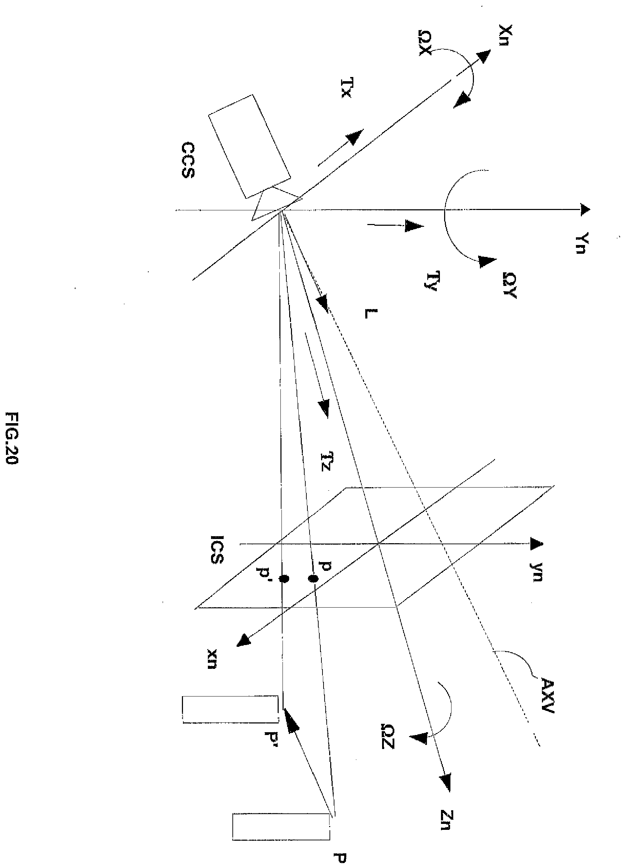

Pour déterminer le déplacement du véhicule V, on utilise des valeurs odométriques (vitesse de roue, vitesse lacet) fournies par ledit véhicule V.
Le déplacement du véhicule V est représenté par le déplacement de la caméra CAM fixée au véhicule V selon la Fig. 20. Sur la Fig. 20 est représentée, dans le repère image, le déplacement d'un point p vers p' du au déplacement de la camera CAM. Le point p est la projection dans le repère image du point P et le point p' est la projection dans le repère image du point P' et correspond a la position de P après déplacement de la caméra CAM.
Dans un mode de réalisation non limitatif, on utilise l'équation suivante représentative du déplacement de la caméra CAM fixée au véhicule V :

$$\begin{cases} x_{n+1} - x_n = -\dfrac{x_n y_n}{f}\,\Omega_X + \dfrac{f^2 + x_n^2}{f}\,\Omega_Y - y_n\Omega_Z + \dfrac{T_Z}{Z_n}\left(x_n - f\dfrac{T_X}{T_Z}\right) \\[3mm] y_{n+1} - y_n = -\dfrac{f^2 + y_n^2}{f}\,\Omega_X + \dfrac{x_n y_n}{f}\,\Omega_Y + x_n\Omega_Z + \dfrac{T_Z}{Z_n}\left(y_n - f\dfrac{T_Y}{T_Z}\right) \end{cases}$$

avec

$\Omega x$ : angle de tangage du véhicule ;
$\Omega y$ : angle de roulis du véhicule ;
$\Omega z$ : angle de lacet du véhicule ;
F : la focale de la caméra CAM ;
Ty : Translation verticale du véhicule V entre une image I et une image suivante I+1 ;
Tz : Translation longitudinal du véhicule V entre une image I et une image suivante I+1 ;
Tx : Translation latérale du véhicule V entre une image I et une image suivante I+1 ;
Xn, Yn : le repère caméra CAM ;
Zn : la distance d'un obstacle O par rapport à la caméra ;
xn+1 - xn : la différence de position en abscisse sur l'image d'un obstacle O entre une image I et une image suivante I+1 ; et
yn+1 - yn : la différence de position en ordonnées sur l'image d'un obstacle O entre une image I et une image suivante I+1.

Dans un mode de réalisation non limitatif, on se place dans le cas d'une situation où la vitesse du véhicule est inférieure ou égale à un seuil représentatif d'une situation de stationnement en cours du véhicule. Dans un exemple non limitatif, le seuil est de 20 km/h.
On a alors : $\Omega x = 0$ et $\Omega y = 0$
Par ailleurs, dans un mode de réalisation non limitatif, on ne considère que le déplacement du véhicule par rapport à l'angle au volant.
Ainsi, Ty = 0
Dans un mode de réalisation non limitatif, la distance Zn est calculée à partir de la largeur d'une deuxième région d'intérêt ROI2 calculée précédemment dans l'étape C) en faisant une hypothèse sur la largeur a priori de l'obstacle O.
On peut ainsi prédire la nouvelle position d'un obstacle dans l'image I à l'instant T+1 ($x_{n+1}$, $y_{n+1}$) à partir du déplacement du véhicule et de sa position à l'instant T ($x_n$, $y_n$) et déterminer ainsi le déplacement prédit Vmp de l'obstacle O induit par le déplacement du véhicule Vmv. On suppose ici que l'obstacle est immobile dans l'image I.

E) Discriminer des deuxièmes régions d'intérêt ROI2.

A cet effet, on compare alors les deux déplacements Vmi et Vmp calculés. Si Vmi=Vmp, alors on conclut que la deuxième région d'intérêt ROI2 à laquelle est associé le vecteur de déplacement Vmi est immobile, i.e. elle ne se déplace pas par rapport au véhicule V. Dans ce cas, on ne tient pas compte de la deuxième région d'intérêt ROI2 représentative d'un obstacle O. Si Vmi≠Vmp, alors on conclut que la deuxième région d'intérêt ROI2 est mobile, i.e elle se déplace par rapport au véhicule V. Dans ce cas, on tient compte de cette deuxième région d'intérêt ROI2 représentative d'un obstacle O.
Dans l'exemple schématique de la Fig. 23, on n'a gardé ainsi qu'une seule région d'intérêt ROI21 correspondant à un obstacle O1 qui est un piéton en déplacement par rapport au véhicule.
La région d'intérêt ROI22 correspondant à l'obstacle O2 n'a pas été retenue. En effet, l'obstacle O2 est un piéton qui est immobile par rapport au véhicule. Son déplacement observé n'était dû qu'au déplacement du véhicule.
Dans un mode de réalisation non limitatif, on associe aux deuxièmes régions d'intérêt ROI2 (dont on tient compte) un indice de confiance IC2.
Dans une variante de réalisation non limitative, IC2 = Valeur absolue((Vmi-Vmp)/ Vmp).
Ainsi, plus le ratio est élevé, plus il y a de chance que l'obstacle O soit un obstacle mobile.

Troisième mode de réalisation

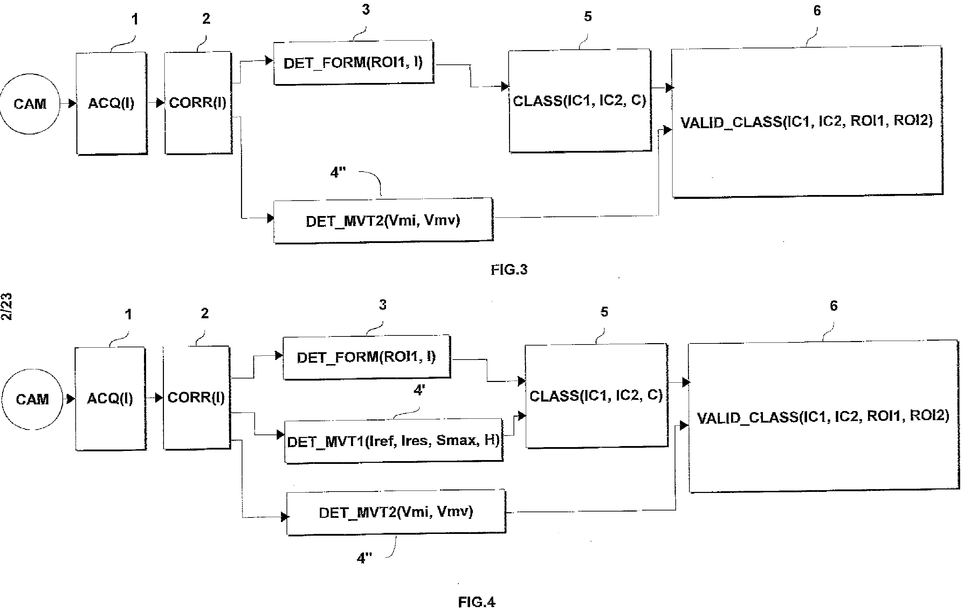

Les deuxièmes régions d'intérêt ROI2 sont définies en effectuant une deuxième détection d'un obstacle par détection de mouvement selon le premier mode de réalisation et le deuxième mode de réalisation décrit ci-dessus, tel qu'illustré sur la Fig. 4.

**Dans une cinquième étape 5),** on classifie l'obstacle O détecté avec respectivement un premier IC1 et deuxième IC2 indice de confiance appliqué à la première ROI1 et la deuxième ROI2 régions d'intérêt par rapport à des caractéristiques données C.

On rappelle que les régions d'intérêt ROI1, ROI2 sont les régions déterminées lors des étapes 3 et 4. On notera cependant que dans le mode de réalisation illustré sur les Fig. 3 et 4, les deuxièmes régions d'intérêt ROI2 qui ont été déterminées par détection de mouvement selon le deuxième mode de réalisation (DET_MVT2(Vmi, Vmv) ne sont pas utilisées dans cette étape. En effet, comme on va le voir ci-après, cette étape de classification permet de classifier un obstacle O à partir de régions d'intérêt ROI1, ROI2 qui représentent un piéton dans son entier, alors que les régions d'intérêt ROI2 déterminées lors de la détection de mouvement DET_MVT2 selon le deuxième mode ne comprennent pas nécessairement un piéton dans son entier.

On remarquera que préalablement à cette étape de classification, on détermine deux types de populations dont une est représentative d'un piéton de la manière suivante. On notera que cette détermination est en général effectuée en amont du procédé de détection décrit.

A partir d'une pluralité de M vignettes de référence VIGNref dont une partie comprend un obstacle tel qu'un piéton et une partie ne comprend pas d'obstacle, on construit des histogrammes de référence HISTREF à partir de l'orientation des contours détectés dans lesdites vignettes (sous-étape CONST_HISTREF(VIGNref)).

Ainsi, dans un mode de réalisation non limitatif, les caractéristiques données sont des histogrammes de gradients orientés. Dans un exemple non limitatif, neuf orientations sont utilisées (correspondant à neuf directions sur 360°). Cela permet d'obtenir un bon compromis entre le temps de calcul et la qualité de la classification.

A chaque pixel d'un contour d'une vignette VIGNref, on calcule une orientation et on regarde à laquelle des neuf orientations OR elle appartient.

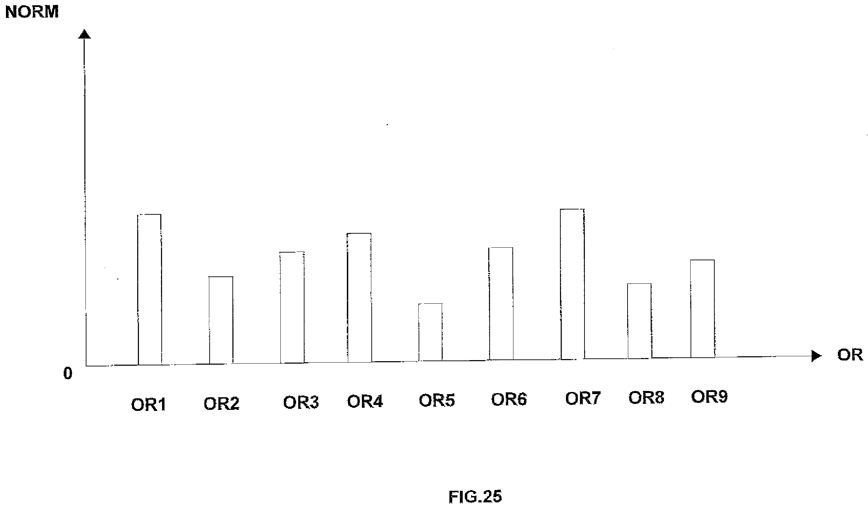

On cumule les normes NORM des orientations sur l'ensemble des pixels des contours d'une vignette VIGNref. On obtient ainsi un histogramme de référence tel qu'illustré à la Fig. 25.

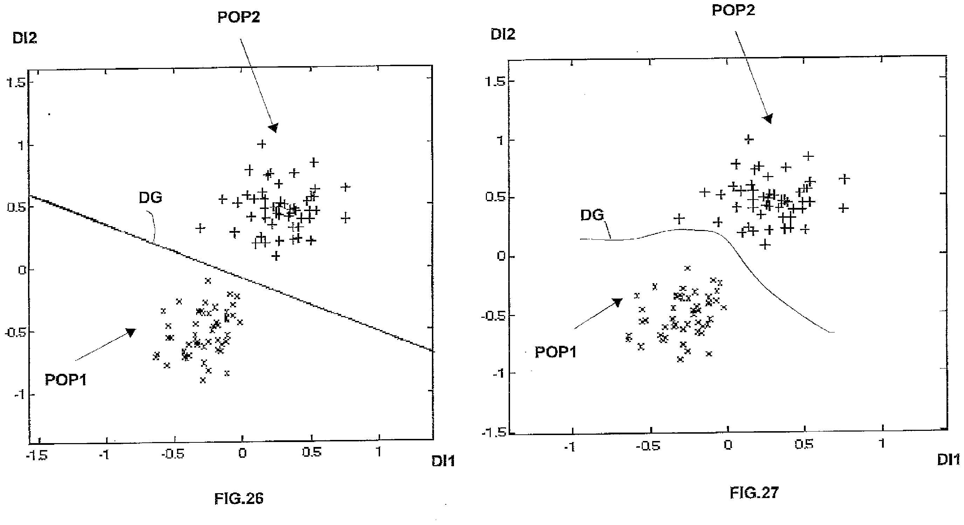

On obtient ainsi M histogrammes de référence qui peuvent être répartis en deux types de populations (une population avec un piéton ou une population sans) comme illustré de façon schématique en 2D (DI1, DI2) sur la Fig. 26. On notera qu'un vecteur « histogramme » ayant ici 9 dimensions, une représentation plus adéquate serait avec 9 dimensions. Par soucis de simplification, uniquement 2 dimensions ont été représentées.

Afin de dissocier ces 2 populations, un algorithme d'apprentissage détermine une frontière de décision. Dans un mode de réalisation non limitatif on construit cette frontière par un séparateur à vaste marge, méthode connue de l'homme du métier appelée méthode SVM (« Support-Vector Machine » en anglais) - édité par Kluwer Academic Publishers , Boston et écrit par Corinna Cortes et Vladimir Vapnik. La frontière peut être de manière non limitative une fonction polynômiale (Par exemple Fig. 26) ou une fonction gaussienne (Par exemple Fig. 27).

L'étape de classification comporte les sous-étapes suivantes.

a) Créer un vecteur de caractéristiques (C) à partir des régions d'intérêt ROI1 et ROI2 déterminées lors des étapes précédentes (respectivement par reconnaissance de forme et par détection de mouvement selon le premier mode de réalisation DET_MVT1) (sous-étape CONST_HIST(ROI1, ROI2) illustrée à la Fig. 5).

Dans un mode de réalisation non limitatif, un vecteur de caractéristiques C est un histogramme des gradients orientés GD d'une région d'intérêt ROI1, ROI2. Dans un exemple non limitatif, neuf orientations sont utilisées. On obtient ainsi des « histogrammes », vecteurs comprenant 9 valeurs.

b) On classifie ledit vecteur de caractéristiques C par comparaison avec une frontière de décision DG déterminée préalablement lors d'une étape d'apprentissage (tel que décrit ci-dessus) (sous-étape COMP(HIST, DG) illustrée à la Fig. 5).

A cet effet, on compare alors les vecteurs obtenus « histogrammes » avec la frontière de décision DG. Plus on s'éloigne de la frontière, et plus la probabilité d'appartenir à une population est élevée. Par ailleurs, plus on se rapproche de la frontière et plus l'appartenance à une population est ambiguë.

c) On détermine un indice de confiance associé IC fonction de la distance du vecteur de caractéristiques par rapport à ladite frontière de décision DG (sous-étape DET(IC1, IC2) illustrée à la Fig. 5).

On définit ainsi des premiers et deuxièmes indices de confiance IC1, IC2 appliqués respectivement aux premières régions d'intérêt ROI1 et aux deuxièmes régions d'intérêt ROI2 et donc respectivement aux vecteurs « histogrammes » construits HIST.

Ainsi, plus un vecteur « histogramme » HIST est proche de la frontière DG, plus l'indice de confiance associé IC est proche de 0.5 par exemple (dans le cas où la valeur d'un indice de confiance se situe entre 0 et 1).

Au contraire, plus un vecteur « histogramme » HIST est loin de la frontière DG dans la région POP1, plus l'indice de confiance IC1 d'appartenance a la population POP1 est élevée et plus l'indice de confiance d'appartenance IC2 à la population POP2 est faible.

Dans l'exemple non limitatif pris dans les Fig. 26 et 27, la première POP1 représente la première population représentative d'un piéton. Dans ce cas, l'indice de confiance IC1 est proche de 1 lorsqu'il est loin de la frontière DG et dans cette région POP1.

On effectue ainsi une classification d'un obstacle O avec les indices de confiance IC1, IC2 appliqués respectivement aux premières et deuxièmes régions d'intérêt ROI1, ROI2 par rapport aux vecteurs histogrammes HIST, la classification permettant de déterminer la catégorie de l'obstacle à laquelle il appartient, ici un piéton ou non.

**Dans une sixième étape 6),** on valide la classification sur l'objet détecté O par rapport auxdits indices de confiance IC1, IC2 et par rapport auxdites régions d'intérêt ROI1, ROI2, tel qu'illustré sur la Fig. 28.

On rappelle que les régions d'intérêt ROI1, ROI2 sont les régions déterminées lors des étapes 3 et 4 et les indices de confiance IC1, IC2 sont les indices de confiance déterminés lors des étapes 4 (issus directement de la détection par mouvement selon le deuxième mode de réalisation DET_MVT2(Vmi, Vmv) et 5 (issus de la classification).

Dans un mode de réalisation non limitatif, la validation comporte les sous-étapes suivantes telles qu'illustrées à la Fig. 6.

a) Construire une carte de probabilité P_MAP correspondant à une image I dans laquelle chaque région d'intérêt classifiée ROI1, ROI2 est représentée par une distribution de probabilité (sous-étape CONST_P_MAP(IC1, IC2, Dim) illustrée à la Fig. 6).

A cet effet, on établit ainsi une carte de probabilité P_MAP basée sur un ensemble de fonctions gaussiennes G cumulées, dans laquelle les fonctions gaussiennes G sont construites à partir :

- Des indices de confiance IC1 et IC2, un indice représentant la valeur maximale d'une fonction gaussienne G ;
- Des dimensions des premières et deuxièmes régions d'intérêt ROI1 et ROI2, les dimensions représentant l'étalement d'une fonction gaussienne G. Les dimensions prisent sont la hauteur et la largeur.

Ainsi, si on représente une fonction gaussienne G en terme mathématique, on a :

$$f(x) = ae^{-\frac{(x-b)^2}{2c^2}}$$

Avec e le nombre d'Euler.

La fonction gaussienne G est représentée de manière graphique sous forme de courbe symétrique en forme de cloche.

On a ainsi :

- a = la hauteur de la cloche, représentée par un indice de confiance IC1, IC2 ; et
- c = la largeur de la cloche, représentée par la taille (en largeur) d'une région d'intérêt ROI1, ROI2
- b = la position du sommet de la courbe.

La carte de probabilité P_MAP comporte ainsi une pluralité de fonctions gaussiennes G dont certaines peuvent se recouper ou non, tel qu'illustré dans un exemple non limitatif à la Fig. 29.

b) Cumuler lesdites distributions de probabilité qui se recoupent dans la carte de probabilité (P_MAP) de manière à obtenir au moins un maximum local (sous-étape ADD_G(P_MAP, ICF) illustrée à la Fig. 6).

A cet effet, on cumule les fonctions gaussiennes G de la carte de probabilité P_MAP qui se recoupent.

On obtient ainsi une pluralité de maximums locaux résultant en une pluralité d'indice de confiance ICF résultants.

Le maximum local permet d'obtenir la localisation la plus probable d'avoir un obstacle O qui est un piéton.

Comme illustré sur l'exemple schématique non limitatif de la Fig. 29, on va obtenir trois maximums locaux de fonctions gaussiennes G.

On notera que dans un mode de réalisation non limitatif, un indice de confiance résultant ICF est plafonné à 1.

c) Valider la région d'intérêt ROI1, ROI2 la plus proche de chaque maximum local de la carte de probabilité P_MAP (sous-étape VALID_CLASS(ROI1, ROI2, ICF) illustrée à la Fig. 6).

Dans une variante de réalisation non limitative, pour chaque maximum local, on choisit la région d'intérêt ROI1, ROI2 (dont l'indice de confiance a été utilisé pour le maximum local) dont le sommet se trouve le plus proche dudit maximum local et on attribue à son indice de confiance associé IC1, IC2 l'indice de confiance résultant ICF. Cette variante permet de se référer à une région d'intérêt ROI1, ROI2 déjà existante car déterminée auparavant dans les étapes précédentes et permet de rester précis au niveau de la localisation d'un obstacle O (une région d'intérêt déjà existante étant centrée sur un obstacle O).

Ainsi, dans l'exemple explicatif du schéma de la Fig. 30 (en 2D pour simplification), on a deux fonctions gaussiennes g1, g2 et leur maximum local gc. La fonction gaussienne g2 est celle dont le sommet est le plus proche du maximum local. La région d'intérêt ROI associée est donc validée.

Dans une autre variante de réalisation non limitative, on pourrait retenir l'indice de confiance ICF résultant du cumul des fonctions gaussiennes. A ce moment, le choix de la région d'intérêt ROI serait une région d'intérêt ROI centrée sur cet indice de confiance.

Dans un mode de réalisation non limitatif, l'étape de validation comporte en outre une sous-étape supplémentaire de :
d) comparer les maximums locaux des fonctions gaussiennes qui se recoupent par rapport à un seuil de détection SG (sous-étape COMP (G, SG) illustrée à la Fig. 6.

Si chaque maximum local est inférieur à ce seuil, on estime que l'indice de confiance résultant ICF est nul. On estime ainsi qu'aucun piéton n'est détecté, mais que les fonctions gaussiennes correspondent à du bruit ou à une fausse détection. Dans ce cas, on ne garde aucune région d'intérêt ROI qui a servi au cumul.

Ainsi, la validation de la classification permet de sélectionner régions d'intérêt validées prises parmi les premières et deuxièmes régions d'intérêt ROI1, ROI2 issues de l'étape de classification et qui représentent chacune un piéton.

Deuxième mode de réalisation

Selon ce deuxième mode de réalisation, outre les étapes décrites dans le premier mode, le procédé de détection comporte en outre les étapes supplémentaires telles qu'illustrées à la Fig. 31 :

7) Effectuer une troisième détection d'obstacle O par capteur(s) avec une plage de détection inférieure à un premier seuil S1 résultant en une position déterminée POS (étape DET_CAPT(POS, S1));
8) Projeter la position POS définie dans un repère de référence COORef (étape PROJ_P1(POS, COORef)) ;
9) Projeter les régions d'intérêt ROI validées dans ledit repère de référence COORef (étape PROJ_P2(ROI1, ROI2)) ; et
10) Mettre en correspondance les deux projections obtenues PJ1, PJ2 et attribuer la position déterminée POS à l'obstacle classifié O en fonction de la mise en correspondance et de la validation (étape CORREL(PJ1, PJ2)).

Dans un mode de réalisation non limitatif, le procédé de détection comporte en outre une étape supplémentaire de confirmer la détection d'un obstacle sur une séquence d'images acquises (étape TRACK(POS)). Cela permet de confirmer la présence d'une dite région d'intérêt validée et de lisser sa position sur toute une séquence SQ d'images I.

Pour la suite de la description, selon ce deuxième mode de réalisation non limitatif, le procédé comprend cette étape supplémentaire.

Les étapes sont décrites en détail ci-après.

**Dans une septième étape 7),** on effectue une troisième détection d'obstacle O par capteur(s) avec une plage de détection inférieure à un premier seuil S1 résultant en une position déterminée POS.

• premier mode de réalisation

Dans un premier mode de réalisation non limitatif illustré à la Fig. 32, la troisième détection s'effectue au moyen de capteurs à ultrasons ULS (étape DET_CAPT1 (POS, S1)). Le premier seuil S1 est représentatif de la plage de détection maximale d'un capteur à ultrasons ULS. Dans un exemple non limitatif, le premier seuil S1 est alors égal à 4 mètres. La détection par capteurs à ultrasons étant connue de l'homme du métier, elle n'est pas décrite ici. On notera seulement que la position déterminée résultante POS comporte une distante Duls entre l'obstacle O et le capteur à ultrasons du véhicule V et une zone de détection Zd (qui est de forme rectangulaire) telle qu'illustrée dans l'exemple schématique non limitatif de la Fig. 42.

• deuxième mode de réalisation

Dans un deuxième mode de réalisation non limitatif illustré à la Fig. 33, la troisième détection s'effectue au moyen de capteurs radars RAD (étape DET_CAPT2(POS, S1)). Le premier seuil S1 est représentatif de la plage de détection maximale d'un capteur radar RAD. Dans un exemple non limitatif, le premier seuil S1 est alors égal à 60 mètres. La détection par capteurs radars étant connue de l'homme du métier, elle n'est pas décrite ici. On notera seulement que la position déterminée résultante POS comporte une distante Drad entre l'obstacle O et le capteur radar du véhicule V et un angle β entre l'obstacle et l'axe AXrad du capteur radar tel qu'illustré dans l'exemple schématique non limitatif de la Fig. 42.

• troisième mode de réalisation

Dans un troisième mode de réalisation non limitatif illustré à la Fig. 34, la troisième détection s'effectue au moyen de capteurs à ultrasons et de capteurs radars RAD. Dans ce cas, la troisième détection comporte une étape de regrouper les détections effectuées sur un même obstacle O par les capteurs à ultrasons ULS et les capteurs radars RAD (sous-étape GROUP illustrée à la Fig. 34).

Dans un mode de réalisation non limitatif, le regroupement s'effectue au moyen d'une comparaison entre les distances capteurs Duls et Drad obtenus. On compare chaque distance Duls avec chaque distance Drad. Si la différence de distances obtenue Diff1 par la comparaison est inférieure à un seuil S4 déterminé, alors on considère que c'est un même obstacle O qui a été détecté par les deux types de capteurs ULS et RAD. Dans un exemple non limitatif, le seuil S4 est de 50 cm.

Dans ce cas (Diff1 <= S4), dans un mode de réalisation non limitatif, on ne garde que la position POS détectée par le capteur radar RAD (la détection par ce dernier étant en général plus précise que celle par un capteur à ultrasons ULS). Dans le cas contraire (Diff1 > S4), on estime que les détections ne correspondent pas à un même obstacle O et on les garde tant que l'on n'a pas pu les regrouper avec d'autres détections.

On obtient ainsi une liste d'obstacle O détectés dans lequel on a supprimé les doubles détections.

On notera que le fait de détecter des obstacles par capteurs en utilisant à la fois des capteurs à ultrasons ULS et des capteurs radars RAD permet d'avoir une couverture très large de détection. En effet, comme on peut le voir sur la Fig. 35, la couverture de détection Zuls par ultrasons permet de couvrir une zone proche du véhicule et devant le véhicule, tandis que la couverture de détection Zrad permet de couvrir une zone plus éloignée du véhicule et sur les côtés du véhicule, tel qu'illustré sur la Fig. 36. On remarquera que dans cette dernière détection par radars, il existe une zone non détectée Zm que l'on appelle également zone morte.

Le fait d'effectuer les détections au moyen des deux types de capteurs ULS et RAD permet de couvrir la zone morte Zm tel qu'illustré à la Fig. 37.

Par ailleurs, on notera que le fait d'effectuer une détection au moyen d'une caméra (que ce soit par reconnaissance de forme ou par détection de mouvement) combinée avec une détection par capteurs permet localiser plus précisément les obstacle détectés dans le repère véhicule, que ce soit une combinaison avec une détection par capteurs à ultrasons seuls ULS (tel qu'illustré à la Fig. 39) ou par capteurs radar seuls RAD (tel qu'illustré à la Fig. 40) ou par capteurs à ultrasons et radars (tel qu'illustré à la Fig. 41).

**Dans une huitième étape 8)**, on projette la position POS définie dans un repère de référence COORef.

Dans un mode de réalisation non limitatif, le repère de référence COORef est le repère image XI ; YI. Cela permet de minimiser l'impact des erreurs de détection lors du calcul de distance dans l'image d'un obstacle O, contrairement à une solution dans laquelle un repère véhicule serait pris en compte.

Dans un exemple non limitatif, on notera que pour effectuer la projection de la position POS dans le repère image XI ; YI, il suffit de connaître la correspondance entre position dans le repère image et la position dans le repère véhicule Xv, Yv.

Dans un exemple non limitatif, la projection s'effectue selon une matrice de projection MP suivante.

Matrice de passage MP :

$$\begin{array}{ccc} -3.353858 & 3.332719 & 1029.732666 \\ -0.077005 & 1.159693 & 467.425964 \\ -0.000233 & 0.009181 & 1.000000 \end{array}$$

$$\text{Equation } [XI, YI] = f(Xv, Yv)$$

$$xi' = Xv*50$$

$$yi' = Yv*50 - 200$$

$$w = 1/ (xi'^*MP(3,1) + yi'^*MP(3,2) + MP(3,3))$$

$$xi = (xi'^*MP(1,1) + yi'^*MP(1,2) + MP(1,3)) * w)$$

$$yi = (xi'^*MP(2,1) + yi'^*MP(2,2) + MP(2,3)) * w)$$

On obtient des premières projections PJ1, telles qu'illustrées schématiquement à la Fig. 43 et à la Fig. 44, correspondant à des obstacles O dont la position POS a été détectée par les capteurs, que ce soient à ultrasons ULS et/ou radar RAD.

On notera que la projection PJ1 d'une position POS d'un obstacle O déterminée par un capteur à ultrasons ULS donne un rectangle. Dans l'exemple illustré à la Fig. 43, on a quatre rectangles PJ11, PJ13, PJ15, PJ17 (en traits pointillés).

Par ailleurs, la projection PJ1 d'une position POS d'un obstacle O déterminée par un capteur radar RAD donne un point. Dans l'exemple illustré à la Fig. 44, on a quatre points PJ12, PJ14, PJ16, PJ18.

Il en est de même dans le cas où les deux types de capteurs (par radar et par ultrasons) ont été utilisés.

Dans les deux cas (capteurs à ultrasons ou capteurs radars), cette étape de projection de la position POS comporte en outre une sous-étape de définir à partir d'une projection PJ1 une zone de projection associée PJ1p. Dans un mode de réalisation non limitatif, la largeur de la zone de projection PJ1p est centrée sur la projection PJ1 et la base de la zone de protection est tangente au point de projection PJ1 (dans le cas d'un point), tel qu'illustré sur la Fig. 44, ou à la base du rectangle de projection PJ1 (dans le cas d'un rectangle) tel qu'illustré sur la Fig. 43.

Dans un exemple non limitatif, on prend les dimensions d'une zone de projection égales à 1,7 m de hauteur sur 0,7m de largeur. Les dimensions de cette zone de projection PJ1p sont ainsi déterminées de sorte correspondre à celles d'un piéton.

Ainsi, dans l'exemple illustré à la Fig. 43, on a quatre zones de projection PJ11p, PJ13p, PJ15p, PJ17p associées respectivement aux quatre rectangles PJ11, PJ13, PJ15, PJ17.

Ainsi, dans l'exemple illustré à la Fig. 44, on a quatre zones de projection PJ12p, PJ14p, PJ16p, PJ18p associées respectivement aux quatre points de projection PJ12, PJ14, PJ16, PJ18.

**Dans une neuvième étape 9),** on projette les régions d'intérêt ROI validées dans ledit repère de référence COORef.

On obtient des deuxièmes projections PJ2, telles qu'illustrées schématiquement à la Fig. 43 et à la Fig. 44, correspondant aux régions d'intérêt validées ROI1, ROI2. On notera que les projections PJ2 sont sous forme de rectangles. Dans l'exemple illustré, on a trois rectangles correspondant PJ21, PJ22, PJ23 (en traits pleins).

**Dans une dixième étape 10),** on met en correspondance les deux projections obtenues PJ1, PJ2 et on attribue la position déterminée POS à l'obstacle classifié O en fonction de la mise en correspondance.

Dans un mode de réalisation non limitatif, la mise en correspondance est une comparaison entre deux projections PJ1, PJ2 qui s'effectue selon les critères suivants :

- une surface de recouvrement Sr entre deux projections PJ1, PJ2 ;
- un ratio Rt en hauteur entre la taille des deux projections PJ1, PJ2 ; et
- une différence Diff2 de distances entre deux projections PJ1, PJ2.

On notera que la distance d'une projection PJ1 est la distance Duls ou Drad donnée par le capteur CAPT. Par ailleurs, la distance d'une projection PJ2 est la distance détectée dans une image I d'une région d'intérêt ROI et recalculée dans le repère véhicule V par la matrice de projection MP.

Dans des exemples non limitatifs :

- la surface de recouvrement Sr est de 70% ;
- le ratio Rt se situe entre 0.5 et 1.5 ; et
- la différence Diff2 est de 1 mètre.

On rappelle que la projection PJ1 d'une détection par capteurs est représentée par la zone de projection PJ1p décrite précédemment. Donc, en pratique, la comparaison s'effectue entre une zone de projection PJ1p et une projection PJ2.

Ainsi, dans le cas où tous ces critères sont remplis, on estime que la mise en correspondance entre deux projections PJ1, PJ2 est positive. Dans le cas contraire, on garde la projection PJ1, PJ2 jusqu'à trouver une mise en correspondance avec une autre projection PJ2, PJ1 respectivement.
Si aucune mise en correspondance n'est trouvée, alors on estime qu'elle est négative.

Dans l'exemple schématique de la Fig.43 :

les projections PJ21, PJ11p

- se recoupent ;
- Sr > 70% ;
- Rt se situe entre 0.5 et 1.5 ;
- Diff2 < 1m.

- les projections PJ22, et PJ13p

- se recoupent ;
- Sr < 70% ;
- Rt se situe entre 0.5 et 1.5 ;
- Diff2 > 1m.

- les projections PJ23, et PJ15p

- se recoupent ;
- Sr < 70% ;
- Rt se situe entre 0.5 et 1.5 ;
- Diff2 < 1m.

Dans l'exemple schématique de la Fig.44 :

- les projections PJ21, PJ12p

- se recoupent ;
- Sr > 70% ;
- Rt se situe entre 0.5 et 1.5 ;
- Diff2 < 1m.

- les projections PJ23, et PJ16p

- se recoupent ;
- Sr < 70% ;
- Rt se situe entre 0.5 et 1.5 ;
- Diff2 > 1m.

Ainsi, lorsque la mise en correspondance est positive, on en déduit que l'obstacle O correspondant est un piéton et dans un mode de réalisation non limitatif, on lui attribue :

- la position POS associée détectée par les capteurs ; et
- la région d'intérêt ROI associée validée lors de l'étape 6).

Par ailleurs, dans un mode de réalisation non limitatif, on augmente son indice de confiance associé IC. Dans un exemple non limitatif, le nouvel indice de confiance IC = IC +(1 - IC)/2.

Dans un autre mode de réalisation, on peut lui associer :

- la position estimée dans le repère véhicule (de la région d'intérêt associée) ; et
- la zone de projection définie PJ1p associée.

On notera cependant que la position POS détectée par les capteurs est plus précise que la position estimée et que la région d'intérêt ROI est également plus précise que la zone de projection définie.

Si aucune mise en correspondance n'est trouvée pour une projection PJ1 ou PJ2 alors :

- dans un mode de réalisation non limitatif, on effectue les tests suivants.

  - Si la projection est une projection capteur PJ1, alors on en déduit que l'obstacle détecté O n'est pas un piéton ;
  - Si la projection est une projection PJ2 d'une région d'intérêt ROI, alors

    - Si l'indice de confiance IC qui lui est associé est supérieur à un seuil de confiance Sc,

      - Alors on en déduit que l'obstacle détecté O est un piéton,
      - Sinon, on en déduit que l'obstacle détecté n'est pas un piéton et on positionne son indice de confiance IC à 0.

Dans un exemple non limitatif, le seuil de confiance Sc = 0.7.

**Dans une onzième étape 11),** on effectue un suivi des régions d'intérêt validées sur une séquence SQ d'images acquises.

Dans un mode de réalisation non limitatif, cette étape utilise une méthode bien connue de l'homme du métier appelée ESM (« efficient Second Order Method ») développé par l'INRIA et décrite dans le document « Benhimane, E. Malis, Real-time image-based tracking of planes using efficient second-order minimization IEEE/RSJ International Conference on Intelligent Robots Systems, Sendai, Japan, 2004 ».

Cette méthode se base sur une recherche d'un même motif dans une séquence SQ d'images acquises I, plus particulièrement entre une image courante et une image de référence et sur la répétition de ce motif dans un nombre déterminé d'images I de la séquence SQ. Cela évite de perdre une détection d'obstacle O dans le cas où un obstacle O ne serait pas détecté sur une image I d'une séquence SQ alors qu'il a été détecté sur les autres images I.

Ainsi, le procédé de l'invention décrit permet de détecter de façon fiable des obstacles O qui sont des piétons ou non en se basant non seulement sur une détection par reconnaissance de forme, une détection par reconnaissance de mouvement, et le cas échéant une détection par capteurs.

Le procédé de l'invention est mis en oeuvre par un dispositif DISP de détection d'un obstacle O dans un environnement E d'un véhicule automobile, ledit dispositif étant représenté schématiquement à la Fig. 45.

Ce dispositif DISP est intégré dans le véhicule automobile V.

Ce dispositif DISP est apte à :

- Définir au moins une première région d'intérêt ROI1 en effectuant une première détection FCT1 d'un obstacle O par reconnaissance de forme dans une image acquise I dudit environnement E ;
- Définir au moins une deuxième région d'intérêt ROI2 en effectuant une deuxième détection d'un obstacle par détection de mouvement par rapport au véhicule V sur une séquence d'images acquises I dudit environnement E ;
- Classifier l'obstacle O détecté avec respectivement un premier IC1 et deuxième IC2 indice de confiance appliqué à la première ROI1 et la deuxième ROI2 régions d'intérêt par rapport à des caractéristiques données C ; et
- Valider la classification sur l'objet détecté O par rapport auxdits indices de confiance IC1, IC2 et par rapport auxdites régions d'intérêt ROI1, ROI2.

Il comporte une unité de contrôle UC apte à effectuer les étapes ci-dessus.

Dans un mode de réalisation non limitatif, le dispositif de détection DISP est en outre apte à :

- Effectuer une troisième détection d'obstacle O par capteur(s) avec une plage de détection inférieure à un premier seuil S1 résultant en une position déterminée POS ;
- Projeter la position POS définie dans un repère de référence COORef ;
- Projeter les régions d'intérêt validées ROI1, ROI2 dans ledit repère de référence COORef ; et
- Mettre en correspondance les deux projections obtenues PJ1, PJ2 et attribuer la position déterminée POS à l'obstacle classifié O en fonction de la mise en correspondance.

Dans des modes de réalisation non limitatifs, le dispositif de détection DISP est en outre apte à :

- Lors de la première détection par reconnaissance de forme :

  - Construire une pyramide d'images Isr par sous échantillonnage récursif d'une image acquise I ;
  - Pour chaque image sous-échantillonnée Isr :

    - Déterminer une région d'intérêt ROI ;
    - Balayer ladite image Isr avec la région d'intérêt ROI ;

- A chaque position successive d'une région d'intérêt ROI dans ladite image Isr, analyser le contenu de la région d'intérêt ROI par un ensemble de classificateurs Cls, Clw, lesdits classificateurs étant déterminés lors d'une phase d'apprentissage préalable.

- Lors d'une deuxième détection par mouvement :

  - Construire une image d'arrière-plan Iref recalculée pour chaque image I d'une séquence d'image SQ ;
  - Soustraire l'image d'arrière-plan Iref à l'image courante Ic dans la séquence d'image SQ résultant en une image résultante Ires;
  - Discriminer des mouvements déterminés dans l'image résultante Ires en fonction d'un seuil Smax ; et
  - Extraire des deuxièmes régions d'intérêt ROI2 à partir de la discrimination.

- Lors d'une deuxième détection par mouvement :

  - Déterminer des points d'intérêt PtI sur une image acquise I ;
  - Suivre ces points d'intérêt PtI sur l'image suivante I+1 et déterminer leur déplacement ;
  - Regrouper en deuxièmes régions d'intérêt ROI2 lesdits points d'intérêt PtI ayant un déplacement similaire Vmi ;
  - Déterminer le déplacement Vmv du véhicule V ; et
  - Discriminer des deuxièmes régions d'intérêt ROI2 ayant un mouvement Vmi dans l'image non résultant du déplacement du véhicule Vmv.

- Lors de l'étape de classification :

  - Créer d'un vecteur de caractéristiques C à partir des régions d'intérêt ROI ;
  - Classifier ledit vecteur de caractéristiques C par comparaison avec une frontière de décision DG déterminée préalablement lors d'une étape d'apprentissage ; et
  - Déterminer un indice de confiance associé IC fonction de la distance du vecteur de caractéristiques par rapport à ladite frontière de décision.

- Lors de l'étape de validation :

  - Construire une carte de probabilité P_MAP correspondant à une image I dans laquelle chaque région d'intérêt classifiée ROI1, ROI2 est représentée par une distribution de probabilité ;
  - Cumuler lesdites distributions de probabilité qui se recoupent dans la carte de probabilité P_MAP de manière à obtenir un maximum local ; et
  - Valider la région d'intérêt ROI1, ROI2 la plus proche de chaque maximum local de la carte de probabilité P_MAP.

- Appliquer un changement de perspective à une image acquise I.

- Suivre des régions d'intérêt validées sur une séquence SQ d'images acquises.

Dans un mode de réalisation non limitatif, le dispositif DISP comporte un ensemble d'unités de contrôle UC comportant au moins une unité de contrôle apte à effectuer les étapes décrites ci-dessus. Dans une variante de réalisation non limitative, l'ensemble comporte une pluralité d'unités de contrôle UC1, UC2, UC3. Ainsi, dans des variantes de réalisation non limitatives, les unités de contrôle UC peuvent être réparties dans la caméra CAM, dans les projecteurs PJ, dans les capteurs ULS, RAD, ou encore dans un calculateur véhicule ECU.

Dans l'exemple non limitatif de la Fig. 45, les fonctions de première et deuxième détections sont réparties dans la caméra CAM et les fonctions de détection par capteurs dans les capteurs CAPT, les autres étant réparties dans le calculateur ECU.

Dans un mode de réalisation non limitatif, la caméra CAM est de type VGA ou WGA et permet d'acquérir des images de taille respective de 640*480 pixels ou 752*480 pixels. Dans un exemple non limitatif, l'angle d'ouverture $\phi$ est de 130°. Bien entendu, d'autres types de caméras avec d'autres caractéristiques peuvent être utilisés.

On notera que la mise en œuvre du procédé de détection exposé ci-dessus peut être effectuée au moyen d'un dispositif micro programmé « software », d'une logique câblée et/ou de composants électroniques « hardware ». Ainsi, le dispositif de réglage DISP peut comporter un ou plusieurs produits programmes d'ordinateur PG comportant une ou plusieurs séquences d'instructions exécutables par une unité de traitement d'information telle qu'un microprocesseur, ou d'une unité de traitement d'un microcontrôleur, d'un ASIC, d'un ordinateur etc., l'exécution desdites séquences d'instructions permettant une mise en œuvre du procédé décrit.

Un tel programme d'ordinateur PG peut être inscrit en mémoire non volatile inscriptible de type ROM ou en mémoire non volatile réinscriptible de type EEPROM ou FLASH. Ledit programme d'ordinateur PG peut être inscrit en mémoire en usine ou encore chargé en mémoire ou téléchargé à distance en mémoire. Les séquences d'instructions peuvent être des séquences d'instructions machine, ou encore des séquences d'un langage de commande interprétées par l'unité de traitement au moment de leur exécution.

Dans l'exemple non limitatif de la Fig. 45, il existe une pluralité de produits programmes d'ordinateur PG1, PG2, PG3 qui sont inscrits dans une mémoire de(s) l'unité(s) de contrôle UC1, UC2, UC3 du dispositif DISP.

Bien entendu, l'invention n'est pas limitée aux modes de réalisation et exemples décrits ci-dessus.

Ainsi, lorsqu'une détection d'un piéton a été validée, on peut prévoir un système d'alerte qui permet d'alerter le conducteur du véhicule V qu'un piéton se trouve à proximité du véhicule et lui permettre de freiner par exemple. On peut prévoir également un système de freinage automatique suite à une telle détection.

Ainsi, le procédé de détection peut être utilisé pour une détection arrière et/ou avant du véhicule automobile V.

Ainsi, l'invention présente notamment les avantages suivants :

- Réduire le nombre de traitements à effectuer grâce à :

  - la détermination de régions d'intérêt dans des zones de détection particulières (au dessous d'une ligne d'horizon ou encore dans une zone de balayage) ;
  - l'établissement du déplacement d'un obstacle par rapport au véhicule au moyen de points d'intérêt spécifiques ;
  - l'application de l'étape de classification (par une méthode de répartition par catégories) uniquement sur des obstacles détectés par reconnaissance de forme et de mouvement et non pas sur toute une image ;

- Rendre plus fiable la détection d'un piéton grâce à la combinaison :

  - une détection par reconnaissance de forme qui permet de reconnaître un piéton en entier ;
  - une détection par mouvement qui permet de reconnaître un obstacle qui est mobile et notamment des piétons dont on ne voit qu'une partie du corps qui bouge ;
  - une détection par capteurs.

- Utiliser des composants couramment présents sur un véhicule automobile, tels qu'une caméra et des détecteurs à ultrasons ou radars ;
- Rendre plus robuste la détection d'un piéton en utilisant une méthode de répartition d'obstacles par catégories pour classifier tous les obstacles détectés par reconnaissance de forme et par reconnaissance de mouvement ;
- Augmenter l'indice de confiance concernant la détection d'un piéton grâce à l'étape de validation et réduire ainsi le nombre de détections à traiter pour la suite le cas échéant (si une détection par capteurs est utilisée) ; et
- Confirmer la détection d'un obstacle sur une séquence d'images lorsque cette détection n'est plus détectée d'une image sur l'autre par les premières et deuxièmes détections.

**Revendications**

1. Procédé de détection d'un obstacle (O) dans un environnement (E) d'un véhicule automobile, **caractérisé en ce qu'**il comporte les étapes de :

    - Définir au moins une première région d'intérêt (ROI1) en effectuant une première détection d'un obstacle (O) par reconnaissance de forme dans une image acquise (I) dudit environnement (E) ;
    - Définir au moins une deuxième région d'intérêt (ROI2) en effectuant une deuxième détection dudit obstacle par détection de mouvement par rapport au véhicule (V) sur une séquence d'images acquises (I) dudit environnement (E) ;
    - Classifier ledit obstacle (O) détecté avec respectivement un premier (IC1) et deuxième (IC2) indice de confiance appliqué à la première (ROI1) et la deuxième (ROI2) régions d'intérêt par rapport à des caractéristiques données (C) ; et
    - Valider la classification sur ledit obstacle détecté (O) par rapport auxdits indices de confiance (IC1, IC2) et par rapport auxdites régions d'intérêt (ROI1, ROI2) résultant en des régions d'intérêt validées (ROI1, ROI2) et

    selon lequel ladite deuxième détection comporte les sous étapes de :

    - Construire une image d'arrière-plan (Iref) recalculée pour chaque image (I) d'une séquence d'images (SQ) ;

- Soustraire l'image d'arrière-plan (Iref) à l'image courante (Ic) dans la séquence d'images (SQ) résultant en une image résultante (Ires) ;
- Discriminer des mouvements déterminés dans l'image résultante (Ires) en fonction d'un seuil (Smax) ; et

Extraire des deuxièmes régions d'intérêt (ROI2) à partir de la discrimination.

2. Procédé de détection selon la revendication 1, selon lequel il comporte en outre les étapes supplémentaires de :

- Effectuer une troisième détection d'obstacle (O) par capteur(s) (ULS ; RAD) avec une plage de détection inférieure à un premier seuil (S1) résultant en une position déterminée (POS) ;
- Projeter la position déterminée (POS) dans un repère de référence (COORef) ;
- Projeter les régions d'intérêt validées (ROI1, ROI2) dans ledit repère de référence (COORef) ; et
- Mettre en correspondance les deux projections obtenues (PJ1, PJ2) et attribuer une position déterminée (POS) à l'obstacle classifié (O) en fonction de la mise en correspondance.

3. Procédé de détection selon la revendication précédente 2, selon lequel le repère de référence est le repère image (XI, YI).

4. Procédé de détection selon l'une au moins des revendications précédentes, selon lequel la première détection par reconnaissance de forme comporte les sous-étapes de :

- Construire une pyramide d'images (Isr) par sous échantillonnage récursif d'une image acquise (I) ;
- Pour chaque image sous-échantillonnée (Isr) :

  - Balayer ladite image (Isr) avec une vignette (VIGN) représentative d'un obstacle déterminé (O) ;
  - A chaque position successive d'une vignette (VIGN) dans ladite image (Isr), analyser son contenu au moyen d'un ensemble de classificateurs (CIs, CIw), lesdits classificateurs étant déterminés lors d'une phase d'apprentissage préalable.

5. Procédé de détection selon la revendication précédente, selon lequel la première détection par reconnaissance de forme comporte en outre une sous-étape supplémentaire de déterminer une zone de balayage (Zb) dans une image sous-échantillonnée (Isr).

6. Procédé de détection selon l'une au moins des revendications précédentes, selon lequel une deuxième détection de mouvement comporte les sous-étapes de :

- Déterminer des points d'intérêt (PtI) sur une image acquise (I) ;
- Suivre ces points d'intérêt (PtI) sur l'image suivante (I+1) et déterminer leur déplacement (Vmi) ;
- Regrouper en deuxièmes régions d'intérêt (ROI2) lesdits points d'intérêt (PtI) ayant un déplacement similaire (Vmi) ;
- Déterminer le déplacement (Vmv) du véhicule (V) ; et
- Discriminer des deuxièmes régions d'intérêt (ROI2) ayant un mouvement (Vmi) dans l'image non résultant du déplacement du véhicule (Vmv).

7. Procédé de détection selon l'une au moins des revendications précédentes, selon lequel l'étape de classification comporte les sous étapes de :

- Créer un vecteur de caractéristiques (C) à partir des régions d'intérêt (ROI) ;
- Classifier ledit vecteur de caractéristiques (C) par comparaison avec une frontière de décision (DG) déterminée préalablement lors d'une étape d'apprentissage ; et
- Déterminer un indice de confiance associé (IC) fonction de la distance du vecteur de caractéristiques par rapport à ladite frontière de décision (DG).

8. Procédé de détection selon la revendication précédente, selon lequel le vecteur de caractéristiques (C) est un histogramme des gradients orientés d'une région d'intérêt (ROI1, ROI2).

9. Procédé de détection selon l'une au moins des revendications précédentes, selon lequel l'étape de validation comporte les sous-étapes de :

- Construire une carte de probabilité (P_MAP) correspondant à une image (I) dans laquelle chaque région d'intérêt classifiée (ROI1, ROI2) est représentée par une distribution de probabilité ;
- Cumuler lesdites distributions de probabilité qui se recoupent dans la carte de probabilité (P_MAP) de manière à obtenir au moins un maximum local ; et
- Valider la région d'intérêt (ROI1, ROI2) la plus proche de chaque maximum local de la carte de probabilité (P_MAP).

10. Procédé de détection selon l'une au moins des revendications précédentes 2 à 9, selon lequel la détection par capteur(s) s'effectue au moyen de capteurs à ultrasons (ULS).

11. Procédé de détection selon l'une au moins des revendications précédentes 2 à 10, selon lequel la détection par capteur(s) s'effectue au moyen de capteurs radars (RAD).

12. Procédé de détection selon l'une au moins des revendications précédentes, selon lequel il comporte en outre une étape supplémentaire d'appliquer un changement de perspective à une image acquise (I).

13. Procédé de détection selon l'une au moins des revendications précédentes, selon lequel il comporte en outre une étape supplémentaire de suivi des régions d'intérêt validées sur une séquence (SQ) d'images acquises.

14. Dispositif de détection d'un obstacle (O) dans un environnement (E) d'un véhicule automobile, agencé pour mettre en œuvre un procédé selon l'une quelconque des revendications précédentes.

15. Produit programme d'ordinateur (PG) comportant une ou plusieurs séquences d'instructions exécutables par une unité de traitement d'information, l'exécution desdites séquences d'instructions permettant une mise en œuvre du procédé selon l'une quelconque des revendications précédentes 1 à 13.


**Patentansprüche**

1. Verfahren zur Erfassung eines Hindernisses (O) in einer Umgebung (E) eines Kraftfahrzeugs, **dadurch gekennzeichnet, dass** es die folgenden Schritte aufweist:

- Definieren mindestens eines ersten Bereichs von Interesse (ROI1), indem eine erste Erfassung eines Hindernisses (O) durch Formerkennung in einem aufgenommenen Bild (I) der Umgebung (E) ausgeführt wird;
- Definieren mindestens eines zweiten Bereichs von Interesse (ROI2), indem eine zweite Erfassung des Hindernisses durch Erfassung einer Bewegung bezüglich des Fahrzeugs (V) an einer Folge aufgenommener Bilder (I) der Umgebung (E) ausgeführt wird;
- Klassifizieren des erfassten Hindernisses (O) mit einem ersten (IC1) bzw. einem zweiten (IC2) Vertrauensindex angewendet an den ersten (ROI1) und den zweiten (ROI2) Bereich von Interesse bezüglich gegebener Merkmale (C); und
- Validieren der Klassifizierung am erfassten Hindernis (O) bezüglich der Vertrauensindices (IC1, IC2) und bezüglich der Bereiche von Interesse (ROI1, ROI2), was zu validierten Bereichen von Interesse (ROI1, ROI2) führt, und

gemäß dem die zweite Erfassung die folgenden Teilschritte aufweist:

- Konstruieren eines für jedes Bild (I) einer Bildfolge (SQ) neu berechneten Hintergrundbilds (Iref) ;
- Subtrahieren des Hintergrundbilds (Iref) vom laufenden Bild (Ic) in der Bildfolge (SQ), was zu einem resultierenden Bild (Ires) führt;
- Unterscheiden bestimmter Bewegungen im resultierenden Bild (Ires) abhängig von einer Schwelle (Smax); und
- Extrahieren zweiter Bereiche von Interesse (ROI2) ausgehend von der Unterscheidung.

2. Erfassungsverfahren nach Anspruch 1, gemäß dem es außerdem die zusätzlichen Schritte aufweist:

- Ausführen einer dritten Hinderniserfassung (O) durch einen Sensor (Sensoren) (ULS; RAD) mit einem Erfassungsbereich kleiner als eine erste Schwelle (S1), was zu einer bestimmten Position (POS) führt;
- Projizieren der bestimmten Position (POS) in ein Bezugskoordinatensystem (COORef);
- Projizieren der validierten Bereiche von Interesse (ROI1, ROI2) in das Bezugskoordinatensystem (COORef);

und
- Abgleichen der zwei erhaltenen Projektionen (PJ1, PJ2) und Zuordnen einer bestimmten Position (POS) zum klassifizierten Hindernis (O) abhängig vom Abgleich.

3. Erfassungsverfahren nach dem vorhergehenden Anspruch 2, gemäß dem das Bezugskoordinatensystem das Bildkoordinatensystem (XI, YI) ist).

4. Erfassungsverfahren nach mindestens einem der vorhergehenden Ansprüche, gemäß dem die erste Erfassung durch Formerkennung die folgenden Teilschritte aufweist:

- Konstruieren einer Pyramide von Bildern (Isr) durch rekursive Unterabtastung eines aufgenommenen Bilds (I) ;
- Für jedes unterabgetastete Bild (Isr):
- Überstreichen des Bilds (Isr) mit einer für ein bestimmtes Hindernis (O) repräsentativen Miniaturansicht (VIGN);
- In jeder aufeinanderfolgenden Position einer Miniaturansicht (VIGN) in dem Bild (Isr), Analysieren ihres Inhalts mittels einer Einheit von Klassifizierern (CIs, CIw), wobei die Klassifizierer während einer vorhergehenden Lernphase bestimmt werden.

5. Erfassungsverfahren nach dem vorhergehenden Anspruch, gemäß dem die erste Erfassung durch Formerkennung außerdem einen zusätzlichen Teilschritt der Bestimmung eines Überstreichungsbereichs (Zb) in einem unterabgetasteten Bild (Isr) aufweist.

6. Erfassungsverfahren nach mindestens einem der vorhergehenden Ansprüche, gemäß dem eine zweite Bewegungserfassung die folgenden Teilschritte aufweist:

- Bestimmen von Punkten von Interesse (PtI) in einem aufgenommenen Bild (I);
- Verfolgen dieser Punkte von Interesse (PtI) im folgenden Bild (I+1) und Bestimmen ihrer Verschiebung (Vmi);
- Umgruppieren der Punkte von Interesse (PtI), die eine gleichartige Verschiebung (Vmi) haben, in zweite Bereiche von Interesse (ROI2);
- Bestimmen der Verschiebung (Vmv) des Fahrzeugs (V); und
- Unterscheiden zweiter Bereiche von Interesse (ROI2), die eine Bewegung (Vmi) im Bild haben, die nicht aus der Verschiebung des Fahrzeugs (Vmv) resultiert.

7. Erfassungsverfahren nach mindestens einem der vorhergehenden Ansprüche, gemäß dem der Klassifizierungsschritt die folgenden Teilschritte aufweist:

- Erzeugen eines Merkmalsvektors (C) ausgehend von den Bereichen von Interesse (ROI);
- Klassifizieren des Merkmalsvektors (C) durch Vergleich mit einer Entscheidungsgrenze (DG), die vorher in einem Lernschritt bestimmt wird; und
- Bestimmen eines zugeordneten Vertrauensindex (IC) abhängig von der Entfernung des Merkmalsvektors bezüglich der Entscheidungsgrenze (DG).

8. Erfassungsverfahren nach dem vorhergehenden Anspruch, gemäß dem der Merkmalsvektor (C) ein Histogramm der ausgerichteten Gradienten eines Bereichs von Interesse (ROI1, ROI2) ist.

9. Erfassungsverfahren nach mindestens einem der vorhergehenden Ansprüche, gemäß dem der Validierungsschritt die folgenden Teilschritte aufweist:

- Konstruieren einer Wahrscheinlichkeitskarte (P_MAP) entsprechend einem Bild (I), in dem jeder klassifizierte Bereich von Interesse (ROI1, ROI2) durch eine Wahrscheinlichkeitsverteilung dargestellt ist;
- Kumulieren der Wahrscheinlichkeitsverteilungen, die sich in der Wahrscheinlichkeitskarte (P_MAP) überschneiden, um mindestens ein lokales Maximum zu erhalten; und
- Validieren des nächstliegenden Bereichs von Interesse (ROI1, ROI2) jedes lokalen Maximums der Wahrscheinlichkeitskarte (P_MAP).

10. Erfassungsverfahren nach mindestens einem der vorhergehenden Ansprüche 2 bis 9, gemäß dem die Erfassung durch einen Sensor (durch Sensoren) mittels Ultraschallsensoren (ULS) erfolgt.

11. Erfassungsverfahren nach mindestens einem der vorhergehenden Ansprüche 2 bis 10, gemäß dem die Erfassung durch einen Sensor (durch Sensoren) mittels Radarsensoren (RAD) erfolgt.

12. Erfassungsverfahren nach mindestens einem der vorhergehenden Ansprüche, gemäß dem es außerdem einen zusätzlichen Schritt der Anwendung eines Perspektivenwechsels auf ein aufgenommenes Bild (1) aufweist.

13. Erfassungsverfahren nach mindestens einem der vorhergehenden Ansprüche, gemäß dem es außerdem einen zusätzlichen Schritt der Verfolgung der validierten Bereiche von Interesse in einer Folge (SQ) aufgenommener Bilder aufweist.

14. Vorrichtung zur Erfassung eines Hindernisses (O) in einer Umgebung (E) eines Kraftfahrzeugs, die eingerichtet ist, um ein Verfahren nach einem der vorhergehenden Ansprüche durchzuführen.

15. Computerprogrammprodukt (PG), das eine oder mehrere Folgen von Anweisungen aufweist, die von einer Informationsverarbeitungseinheit ausgeführt werden können, wobei die Ausführung der Folgen von Anweisungen eine Durchführung des Verfahrens nach einem der vorhergehenden Ansprüche 1 bis 13 erlaubt.

**Claims**

1. Method for detecting an obstacle (O) in an environment (E) of a motor vehicle, **characterized in that** it includes the steps of:

   - defining at least one first region of interest (ROI1) by performing a first detection of an obstacle (O) by means of shape recognition in an acquired image (I) of said environment (E);
   - defining at least one second region of interest (ROI2) by performing a second detection of said obstacle by detecting movement relative to the vehicle (V) over a sequence of acquired images (I) of said environment (E);
   - classifying said detected obstacle (O) with a first confidence index (IC1) and a second confidence index (IC2) applied to the first region of interest (ROI1) and the second region of interest (ROI2), respectively, with respect to given features (C); and
   - validating the classification for said detected obstacle (O) with respect to said confidence indices (IC1, IC2) and with respect to said regions of interest (ROI1, ROI2), resulting in validated regions of interest (ROI1, ROI2), and

   wherein said second detection includes the sub-steps of:

   - constructing a background image (Iref), which is recomputed for each image (I) of a sequence of images (SQ) ;
   - subtracting the background image (Iref) from the current image (Ic) in the sequence of images (SQ), resulting in a resultant image (Ires);
   - differentiating movements determined in the resultant image (Ires) on the basis of a threshold (Smax); and
   - extracting second regions of interest (ROI2) on the basis of the differentiation.

2. Detection method according to Claim 1, wherein said method further includes the additional steps of:

   - performing a third detection of an obstacle (O) by means of one or more sensors (ULS; RAD) with a detection range lower than a first threshold (S1), resulting in a determined position (POS);
   - projecting the determined position (POS) into a frame of reference (COORef);
   - projecting the validated regions of interest (ROI1, ROI2) into said frame of reference (COORef); and
   - correlating the two obtained projections (PJ1, PJ2) and attributing a determined position (POS) to the classified obstacle (O) on the basis of the correlation.

3. Detection method according to the preceding Claim 2, wherein the frame of reference is the image frame (XI, YI).

4. Detection method according to at least one of the preceding claims, wherein the first detection by means of shape recognition includes the sub-steps of:

   - constructing an image pyramid (Isr) by recursive subsampling of an acquired image (I);
   - for each subsampled image (Isr):

- scanning said image (Isr) with a patch (VIGN) representative of a determined obstacle (O);
- at each successive position of a patch (VIGN) in said image (Isr), analysing the content thereof by means of a set of classifiers (Cls, Clw), which classifiers are determined during a prior learning phase.

5. Detection method according to the preceding claim, wherein the first detection by means of shape recognition further includes an additional sub-step of determining a scanning zone (Zb) in a subsampled image (Isr).

6. Detection method according to at least one of the preceding claims, wherein a second movement detection includes the sub-steps of:

 - determining points of interest (PtI) in an acquired image (I);
 - tracking these points of interest (PtI) in the next image (I+1) and determining the movement thereof (Vmi);
 - grouping said points of interest (PtI) that exhibit a similar movement (Vmi) into second regions of interest (ROI2);
 - determining the movement (Vmv) of the vehicle (V); and
 - differentiating second regions of interest (ROI2) that exhibit a movement (Vmi) in the image that is not due to the movement of the vehicle (Vmv).

7. Detection method according to at least one of the preceding claims, wherein the classifying step includes the sub-steps of:

 - creating a vector of features (C) on the basis of the regions of interest (ROI);
 - classifying said vector of features (C) by comparison with a decision boundary (DG) determined beforehand during a learning step; and
 - determining an associated confidence index (IC), which is based on the distance of the vector of features from said decision boundary (DG).

8. Detection method according to the preceding claim, wherein the vector of features (C) is a histogram of the oriented gradients of a region of interest (ROI1, ROI2).

9. Detection method according to at least one of the preceding claims, wherein the validating step includes the sub-steps of:

 - constructing a probability map (P_MAP) that corresponds to an image (I), in which each classified region of interest (ROI1, ROI2) is represented by a probability distribution;
 - combining said probability distributions that overlap in the probability map (P_MAP) so as to obtain at last one local maximum; and
 - validating the region of interest (ROI1, ROI2) that is closest to each local maximum of the probability map (P_MAP).

10. Detection method according to at least one of the preceding Claims 2 to 9, wherein the detection by means of one or more sensors is performed using ultrasonic sensors (ULS).

11. Detection method according to at least one of the preceding Claims 2 to 10, wherein the detection by means of one or more sensors is performed using radar sensors (RAD).

12. Detection method according to at least one of the preceding claims, wherein said method further includes an additional step of applying a change of perspective to an acquired image (I).

13. Detection method according to at least one of the preceding claims, wherein said method further includes an additional step of tracking the validated regions of interest over a sequence (SQ) of acquired images.

14. Device for detecting an obstacle (O) in an environment (E) of a motor vehicle, which device is designed to implement a method according to any one of the preceding claims.

15. Computer program product (PG) including one or more sequences of instructions that can be executed by an information processing unit, the execution of said sequences of instructions making it possible to implement the method according to any one of the preceding Claims 1 to 13.

Figure pour abrégé

FIG.1

FIG.2

FIG.3

FIG.4

CLASS(IC1, IC2, C) — 5

CONST_HIST(ROI1, ROI2) — 5a

COMP(HIST, DG) — 5b

DET(IC1,IC2) — 5c

FIG.5

VALID_CLASS(IC1, IC2, ROI1, ROI2) — 6

CONST_P_MAP(IC1, IC2, Dim) — 6a

ADD_G(P_MAP, ICF) — 6b

VALID_CLASS(ROI1, ROI2, ICF) — 6c

COMP(G, SG) — 6d

FIG.6

FIG.7

I1

FIG.8

I2

FIG.9

FIG.10

FIG.11

FIG.12

FIG.13

FIG.14

VIGN

FIG.15

ROI1

FIG.16

CLs0

NOK

CLs1

NOK

CLsn-1

NOK

CLsn

NOK

NOK

REJ_POS

MEM_POS

FIG.19

FIG.17

FIG18

FIG.20

FIG.21

FIG.22

FIG.23

FIG.24

FIG.25

FIG.26

FIG.27

FIG.28

ROI2

O1

O2

ROI1

O1

O2

P_MAP

O1

O2

IVF

FIG.29

FIG.30

EP 2 275 971 B1

```
  ┌─────┐    1        2              3
  │ CAM │→ ┌──────┐ ┌────────┐  ┌──────────────────┐
  └─────┘  │ACQ(I)│→│CORR(I) │→ │ DET_FORM(ROI1, I) │
           └──────┘ └────────┘  └──────────────────┘
                                ┌──────────────────┐
                                │ DET_MVT(ROI2, SQ) │
                                └──────────────────┘
                                         4
```

**DET_FORM(ROI1, I)** — 3

**DET_MVT(ROI2, SQ)** — 4

**CLASS(IC1, IC2,C)** — 5

**VALID_CLASS(IC1, IC2, ROI1, ROI2)** — 6

**PROJ_P2(ROI1, ROI2)** — 9

**DET_CAPT(POS, S1)** — 7

**PROJ_P1(POS, COORef)** — 8
**DEF_ZONE(PJp1)**

**CORREL(PJ1, PJ2)** — 10

**TRACK(POS)** — 11

CAPT

FIG.31

FIG.32

CAM

ACQ(I) — 1

CORR(I) — 2

DET_FORM(ROI1, I) — 3

DET_MVT(ROI2, SQ) — 4

CLASS(IC1, IC2, C) — 5

VALID_CLASS(IC1, IC2, ROI1, ROI2) — 6

ULS

DET_CAPT1(POS, S1) — 7'

PROJ_P1(POS, COORef)
DEF_ZONE(PJp1) — 8

PROJ_P2(ROI1, ROI2) — 9

CORREL(PJ1, PJ2) — 10

TRACK(POS) — 11

EP 2 275 971 B1

CAM → ACQ(I) [1] → CORR(I) [2]

DET_FORM(ROI1, I) [3]

DET_MVT(ROI2, SQ) [4]

CLASS(IC1, IC2, C) [5] → VALID_CLASS(IC1, IC2, ROI1, ROI2) [6]

PROJ_P2(ROI1, ROI2) [9]

RAD → DET_CAPT2(POS, S1) [7"] → PROJ_P1(POS, COORef) [8]

DEF_ZONE(PJp1)

CORREL(P1, P2) [10]

TRACK(POS) [11]

FIG.33

FIG. 34

FIG.35

Zuls

ULS

FIG.36

Zrad

Zm

RAD

**FIG.37**

**FIG.38**

Zcam

FIG.39

FIG.40

FIG.41

FIG.42

XI

PJ11p

PJ13p

PJ17p

POS , ROIv

PJ22

PJ21

MP

PJ13

PJ17

PJ11

PJ23

PJ15p

YI

PJ15

FIG.43

XI

PJ14p

POS , ROIv

PJ12p

PJ21

PJ22

MP

PJ14

PJ12

PJ16p

PJ18p

PJ23

PJ16

PJ18

YI

FIG.44

EP 2 275 971 B1

DISP

CAM

ECU

**UC1**

**PG1**

DET_MVT1(Iref, Ires, Smax, H)

DET_MVT2(Vmi, Vmv)

CLASS(IC1, IC2, C)

VALID_CLASS(IC1, IC2, ROI1, ROI2)

PROJ_P1(POS, COORef)

DEF_ZONE(PJp1)

PROJ_P2(ROI1, ROI2)

CORREL(PJ1, PJ2)

TRACK(POS)

**UC2**

**PG2**

ACQ(I) | CORR(I) | DET_FORM(ROI1, I)

CAPT

**UC3**

**PG3**

DET_CAPT1(POS, S1)

DET_CAPT2(POS, S1)

GROUP

50

FIG.45

## RÉFÉRENCES CITÉES DANS LA DESCRIPTION

### Littérature non-brevet citée dans la description

- **LUCAS PALETTA ; GERHARD PAAR.** Bayesian Decision Fusion for Dynamic Multi-cue Object Détection. *Indian Conference on Computer Vision, Graphics and Image Processing,* 16 Décembre 2002
- Human Detection Using Oriented Histograms of Flow and Appearance. **NAVNEET DALAL ; BILL TRIGGS ; CORDELIA SCHMID.** Lecture Notes in Computer Science-ECCV 2006. Springer, 2006, 428-441
- **RON MEIR ; GUNNAR RÄTSCH.** an introduction to Boosting and Leveraging. Departement of Electrical Engineering, Technion, Haifa 32000 Israel
- **G. CHRISTOGIANNOPOULOS ; P. B. BIRCH ; R. C. D. YOUNG ; C. R. YOUNG.** Segmentation of moving objects from cluttered background scenes using a running average model. *SPIE Journal,* 2005, vol. 5822, 13-20
- **B.D. LUCAS ; T. KANADE.** n Iterative Image Registration Technique with an Application to Stereo Vision. *IJCAI '81,* 674-679
- **S.S BEAUCHEMIN ; J.L BARRON.** the Computation of Optical flow. University of Western Ontario, Septembre 1995, vol. 27
- **BENHIMANE, E. MALIS.** *Real-time image-based tracking of planes using efficient second-order minimization IEEE/RSJ International Conference on Intelligent Robots Systems,* 2004